# FASCICULE DE BREVET EUROPEEN

(11) **EP 2 679 088 B1**
(45) Date de publication et mention de la délivrance du brevet: **11.05.2016**
(21) Numéro de dépôt: 13173626.6
(22) Date de dépôt: 25.06.2013
(51) Int. Cl.: A01G 7/00

(54) **Rhizotron et utilisations de celui-ci**
Rhizotron und seine Anwendungen
Rhizotron and uses thereof

(30) Priorité: 26.06.2012 FR 1256069
(43) Date de publication de la demande: 01.01.2014
(73) Titulaire: Institut National de la Recherche Agronomique (INRA), 75338 Paris Cedex 07 (FR); Inoviaflow, 21800 Chevigny Saint Sauveur (FR)
(72) Inventeur: Salon, Christophe, 21250 Montagny lès Seurre (FR); Jeudy, Christian, 21270 Maxilly sur Saône (FR); Bernard, Céline, 21000 Dijon (FR); Mougel, Christophe, 21310 Mirebeau sur Bèze (FR); Coffin, Arnaud, 21000 Dijon (FR); Bourion, Virginie, 21600 Longvic (FR); Moreau, Delphine, 21000 Dijon (FR); Palavioux, Karine, 21000 Dijon (FR); Baussart, Christophe, 70140 Pesmes (FR)
(74) Mandataire: Nony

(56) Documents cités:
- WO-A1-2006/029987
- WO-A2-2006/114714
- KR-A- 20100 046 407
- DANIELA L. BELL ET AL: "Dynamic Phenotypic Plasticity for Root Growth in Polygonum: A Comparative Study", AMERICAN JOURNAL OF BOTANY, vol. 86, no. 6, 1 juin 1999 (1999-06-01), pages 807-819, XP055053811, ISSN: 0002-9122, DOI: 10.2307/2656702
- NIMA YAZDANBAKHSH ET AL: "High throughput phenotyping of root growth dynamics, lateral root formation, root architecture and root hair development enabled by PlaRoM", FUNCTIONAL PLANT BIOLOGY, vol. 36, no. 11, 1 janvier 2009 (2009-01-01), page 938, XP055053819, ISSN: 1445-4408, DOI: 10.1071/FP09167
- JENNESON P M ET AL: "Optimisation of X-ray micro-tomography for the in situ study of the development of plant roots", 1999 IEEE NUCLEAR SCIENCE SYMPOSIUM. CONFERENCE RECORD. 1999 NUCLEAR SCIENCE SYMPOSIUM AND MEDICAL IMAGING CONFERENCE (CAT. NO.99CH37019) IEEE PISCATAWAY, NJ, USA,, vol. 1, 1 janvier 1999 (1999-01-01), pages 429-432VOL.1, XP002640859, ISBN: 0-7803-5696-9

## Description

### Domaine de l'invention

La présente invention se rapporte au domaine de l'observation du développement des racines de plantes, y compris pour la sélection de plantes possédant des caractères d'intérêt, notamment des caractères agronomiques d'intérêt. La présente invention se rapporte plus particulièrement au domaine de la culture et du phénotypage de plantes, par exemple dans des procédés de sélection de variétés végétales.

### Etat de la Technique

Il existe un besoin croissant pour le développement d'une agriculture à la fois plus performante et plus respectueuse de l'environnement, et dont les produits satisfont certains critères qualitatifs et/ou quantitatifs exigés par l'industrie ou le consommateur final. Il existe notamment un besoin pour la disponibilité de plantes ayant une physiologie adaptée à des substrats de culture ou à des conditions climatiques locales spécifiques, telles que des conditions de faible pluviométrie ou bien une faible disponibilité en éléments minéraux d'origine tellurique.

Il existe divers systèmes de sélection basés sur la détermination de caractéristiques génétiques, susceptibles d'être utilisés pour la sélection de plantes présentant des caractéristiques phénotypiques spécifiques recherchées qui leur sont conférées par des déterminants génétiques donnés. Toutefois, à la lumière des connaissances actuelles, un lien entre la présence d'une caractéristique génétique donnée et son expression au niveau phénotypique ne peut être établi de manière systématique. Ainsi, pour la réalisation de procédés de sélection de plantes d'intérêt, le recours à des procédés de phénotypage est requis.

La majorité des systèmes de phénotypage de plantes connus sont destinés à détecter ou à mesurer les caractéristiques des parties aériennes, en particulier des tiges, des feuilles et des fleurs.

Toutefois, pour la sélection de nouvelles variétés de plantes, il est également important d'évaluer des caractéristiques de l'appareil racinaire des plantes, dont une des fonctions essentielles est de réguler l'apport en nutriments et en solution aqueuse, ces apports étant indispensables au développement et à la croissance des plantes.

Les racines végétales peuvent être exposées à des conditions environnementales très variées car les propriétés physiques, chimiques et biologiques du sol peuvent considérablement varier localement ou dans le temps. Certaines conditions environnementales peuvent substantiellement affecter le développement et la croissance des racines, et en conséquence la croissance des plantes. L'interaction entre les racines et la structure du sol entraînant des effets sur la physiologie racinaire est encore mal connue. Une meilleure connaissance de la physiologie racinaire, en relation avec la structure, la physico-chimie ou la biologie du sol, est essentielle, dès lors qu'il est connu que la croissance des plantes est intimement liée à la localisation des racines dans la structure du sol et au micro-environnement local, y compris à la flore bactérienne ou fongique localement présente.

Pour l'étude du développement racinaire, on connait des méthodes consistant à prélever les plantes entières et à laver les racines afin de déterminer notamment leur longueur ou leur densité, paramètres qui sont considérés comme étant essentiels dans de nombreux modèles de détermination de la capacité des plantes à extraire l'eau à partir du sol. Toutefois, l'action de prélèvement des plantes entières, ou les étapes d'élimination de la terre au cours de l'étape de lavage, provoquent souvent une détérioration des racines en particulier les plus fines, ce qui est source d'erreurs dans les mesures de la croissance racinaire.

Selon d'autres techniques, la géométrie du réseau racinaire et la longueur des racines sont déterminées par l'exposition d'un échantillon de terre contenant les racines d'une plante à une source micro-focalisée de rayons X de quelques dizaines de micromètres, puis par l'acquisition d'images à partir de l'énergie transmise par l'échantillon de terre. L'étude du développement racinaire par exposition d'un échantillon de sol aux rayons X est illustrée notamment dans les demandes PCT publiées respectivement sous les n° WO 2006/114714 et WO 2006/029987.

On connait aussi des méthodes d'évaluation du développement racinaire dans lesquelles on acquiert des images du réseau racinaire après exposition d'un échantillon de substrat nutritif à un faisceau laser, à une source de rayonnement infrarouge ou encore à une source de lumière dans le spectre visible.

Les méthodes ci-dessus présentent toutefois de nombreuses limitations, parmi lesquelles (i) un coût élevé, (ii) une faible disponibilité d'un équipement adapté et (iii) une acquisition d'image des racines avec un niveau de résolution spatiale insuffisant pour détecter les racines de faible diamètre. Ces méthodes sont surtout très lentes et ne permettent pas de réaliser un suivi dynamique du développement du réseau racinaire simultanément pour un nombre élevé de plantes.

D'autres méthodes ont été conçues dans l'objectif de réaliser un phénotypage racinaire pour un nombre de plantes plus élevé qu'avec les méthodes citées précédemment.

Selon certaines de ces méthodes connues, les végétaux sont plantés dans des conteneurs parallélépipédiques pourvus de parois transparentes. Les conteneurs sont emplis d'un milieu nutritif solide également transparent, par exemple de l'agar. Ces dispositifs, appelés couramment « mini-rhizotrons », sont de taille réduite, typiquement de 120 mm de côté et d'une profondeur de quelques millimètres (voir par exemple Yazdanbakhsh et al., 2009, Functional Plant Biology, Vol. 36 : 938-946). Grâce à la transparence des parois des mini-rhizotrons et du milieu nutritif contenu dans ceux-ci, l'évaluation du développement racinaire peut être étudiée directement, dans le rayonnement visible, par exemple en utilisant des systèmes automatiques d'acquisition d'images. Des dispositifs du type « mini-rhizotrons » sont décrits notamment par Bell et al. (1999, American Journal of Botany, Vol. 86(6) : 807-819) ou encore par Yazdanbakhsh et al. (2009, Functional Plant Biology, Vol. 36 : 938-946).

Les mini-rhizotrons présentent l'avantage de permettre un phénotypage racinaire avec un débit supérieur aux autres méthodes connues. Toutefois, ces dispositifs sont adaptés exclusivement à l'étude du développement racinaire de plantes de petite taille, dont la longueur du réseau racinaire ne dépasse pas quelques centimètres. D'ailleurs, dans la pratique, les mini-rhizotrons ont principalement été utilisés principalement, sinon exclusivement, pour le phénotypage racinaire de plantes dites « modèles » de l'espèce *Arabidopsis thaliana.*

Il existe un besoin important pour des dispositifs de rhizotrons adaptés pour un phénotypage à haut débit, c'est-à-dire pour un phénotypage nécessitant un grand nombre de mesures de caractéristiques du réseau racinaire de plantes, alternatifs ou améliorés par rapport aux dispositifs connus.

### Résumé de l'invention

La présente invention est relative à un rhizotron (10) comportant :
- une paroi interne (12),
- une paroi externe (13), définissant avec la paroi interne (12) un espace de propagation racinaire (11), destiné à recevoir un substrat,
- au moins un logement (45) en partie supérieure pour supporter, indépendamment de la présence de substrat dans l'espace de propagation racinaire (11), une semence, ce logement (45) communiquant avec l'espace de propagation racinaire.

Selon un autre aspect, la présente invention concerne un rhizotron (10) comportant :
- une paroi externe (13), cylindrique de révolution,
- une paroi interne (12) coaxiale à la paroi externe, définissant avec cette dernière un espace de propagation racinaire (11), destiné à recevoir un substrat,
- un système d'alimentation de l'espace de propagation racinaire en un liquide, notamment de l'eau ou une solution nutritive.

Dans certains modes de réalisation, l'espace de propagation racinaire (11) est destiné à être rempli avec un matériau substrat de culture dans le volume où se développeront les racines de plantes.

Dans d'autres modes de réalisation, l'espace de propagation racinaire est composite et peut comprendre une pluralité de zones, ou sous-espaces, telles que (i) une zone de réserve en eau ou liquide nutritif laquelle peut comprendre du substrat ou un matériau poreux, et (ii) une zone dans laquelle se propagent les racines de plantes.

### Figures

- la **figure 1** est une coupe longitudinale d'un exemple de rhizotron
- la **figure 2** est une vue analogue à la figure 1 d'une variante de réalisation,
- la **figure 3** est une vue supérieure de la platine (35) du rhizotron de la figure 2,
- les **figures 4 et 5** sont des vues analogues à la figure 1 d'une variante de réalisation. La figure 5 est une vue du rhizotron de la figure 4 qui a subi une rotation horizontale d'un angle de 90 °,
- la **figure 6** est une vue supérieure de la platine (35) de la variante de réalisation des figures 4 et 5,
- la **figure 7** est une vue partielle de la partie supérieure d'une variante du rhizotron, selon une coupe longitudinale,
- les **figures 8 et 9** illustrent l'utilisation d'une gaine d'occultation de la lumière.
- les **figures 10 et 11** illustrent une variante du rhizotron pourvu d'un système de compression du réseau racinaire. La figure 10 illustre cette variante du rhizotron avec le système de compression en position de repos. La figure 11 illustre cette variante du rhizotron avec le système de compression en position de fonctionnement,
- la **figure 12** est une vue supérieure de la variante de rhizotron représentée sur les figures 10 et 11. Sur la figure 12 est représenté une variante du système d'alimentation du rhizotron en liquide, par l'intermédiaire d'une réserve de liquide située dans la partie supérieure du rhizotron et de canaux d'écoulement permettant une circulation du liquide à partir de la réserve et vers l'espace de propagation racinaire, et
- la **figure 13** est une vue partielle de la partie d'une variante du rhizotron, selon une coupe longitudinale.

### Description détaillée de l'invention

La présente invention vise à fournir un dispositif adapté à l'observation du réseau racinaire de plantes, et en particulier de l'évolution du réseau racinaire (i) en fonction du degré de croissance des plantes, (ii) en fonction de la constitution chimique ou physique du substrat de culture, (iii) en fonction de l'hygrométrie de l'environnement racinaire ou encore (iii) en fonction des microorganismes présents dans le substrat de culture ou au contact des racines. L'invention vise ainsi à fournir un dispositif permettant, notamment, de déterminer la capacité d'adaptation de plantes à des conditions environnementales fluctuantes ou à des contraintes environnementales. Un tel dispositif doit être adapté au phénotypage des racines de plantes, qui est utile notamment pour la sélection de plantes adaptées à des conditions de culture désirées.

La présente invention concerne un rhizotron et son utilisation.

Il est fourni selon l'invention de nouveaux rhizotrons, lesquels sont notamment adaptés au phénotypage racinaire à haut débit de plantes de taille moyenne ou grande, dont la longueur du réseau racinaire peut atteindre plusieurs dizaines de centimètres.

La présente invention est relative à un rhizotron (10) comportant :
- une paroi interne (12),
- une paroi externe (13), définissant avec la paroi interne (12) un espace de propagation racinaire (11), destiné à recevoir un substrat,
- au moins un logement (45) en partie supérieure pour supporter, indépendamment de la présence de substrat dans l'espace de propagation racinaire (11), une semence, ce logement (45) communiquant avec l'espace de propagation racinaire.

Selon un autre aspect, la présente invention concerne un rhizotron (10) comportant :
- une paroi externe (13), cylindrique de révolution,
- une paroi interne (12) coaxiale à la paroi externe, définissant avec cette dernière un espace de propagation racinaire (11), destiné à recevoir un substrat,
- un système d'alimentation de l'espace de propagation racinaire en un liquide, notamment de l'eau ou une solution nutritive pour les plantes.

Par « rhizotron », on entend aux fins de la présente description un dispositif permettant la culture d'au moins une plante et qui est adapté à la détermination d'au moins une caractéristique phénotypique des racines de ladite plante.

Le phénotypage des plantes consiste à réaliser la caractérisation de leur phénotype, c'est-à-dire de l'ensemble des caractères observables d'un individu, lesdits caractères étant la conséquence d'interactions entre l'expression des gènes de la plante sous l'influence éventuelle de l'environnement.

L'expression « comportant un » doit se comprendre comme étant synonyme de « comportant au moins un ».

La mesure de caractères phénotypiques des racines de plantes implique, dans la plupart des cas, la réception d'un signal physique par un capteur, en particulier la réception d'un signal électromagnétique tel qu'un rayonnement d'une longueur d'onde donnée ou d'une pluralité de longueurs d'onde données, par un capteur. Le signal physique peut être de la lumière dans le spectre visible ou l'infrarouge ou l'ultraviolet. Le signal peut aussi être un rayonnement X. Selon le type de mesures phénotypiques désirées, on choisira pour la paroi externe (13) un matériau adapté, par exemple un matériau transparent à la lumière ou un matériau transparent aux rayons X mais opaque à la lumière.

Ainsi, la paroi externe (13) ne doit pas constituer un obstacle à la méthode de caractérisation phénotypique des racines choisie. Les caractéristiques physiques de la paroi externe (13), notamment sa faculté à transmettre les rayonnements qui seront *in fine* mesurés, doivent être adaptées selon le rayonnement utilisé ou bien selon tout autre moyen permettant la mesure de caractéristiques du système racinaire. L'homme du métier choisira une paroi externe (13) dont les caractéristiques sont appropriées, en particulier dont les caractéristiques de résistance mécanique, les caractéristiques de transparence vis-à-vis de la grandeur physique mesurée, les caractéristiques d'épaisseur, et/ou les caractéristiques optiques (p. ex : propriétés de réflexion ou de transmittance des rayonnements) sont appropriées.

Ainsi, de manière générale, la paroi externe (13) du rhizotron est, sur au moins une partie de sa surface, transparente à au moins une longueur d'onde du signal physique qui est mesuré pour déterminer au moins une caractéristique phénotypique des racines d'une plante.

De préférence, la paroi externe (13) du rhizotron est, sur au moins une partie de sa surface, transparente à la fois (i) à au moins une longueur d'onde d'une source d'énergie émise vers le rhizotron et (ii) à au moins une longueur d'onde du signal physique réfléchi par le rhizotron, lequel signal physique est mesuré pour déterminer au moins une caractéristique phénotypique des racines d'une plante.

En particulier, la paroi externe (13) peut être transparente, au moins sur une partie de sa surface, à la lumière visible, à un rayonnement infrarouge, à un rayonnement ultraviolet ou aux rayons X.

Ainsi, dans certains modes de réalisation d'un rhizotron selon l'invention, la paroi externe (13) peut être réalisée, au moins sur une partie de sa surface, en un matériau connu pour laisser passer les rayons X. Un tel matériau peut aussi laisser passer la lumière ou bien au contraire être opaque à la lumière. Les matériaux transparents aux rayons X englobent le verre, un matériau polymère transparent aux rayons X, ou encore un matériau textile opaque à la lumière. Les matériaux polymères transparents aux rayons X englobent le polyméthacrylate de méthyle (PMMA), un polycarbonate y compris un polycarbonate opaque à la lumière, une résine de polyester ou encore une résine de polystyrène.

Du fait que la paroi externe (13) est, au moins sur une partie de sa surface, transparente au signal physique qui est mesuré pour caractériser les racines, un rhizotron tel que défini ci-dessus permet d'observer les racines tout au long de la croissance d'une plante, sans destruction de celles-ci.

Par matériau « transparent à la lumière », on entend selon l'invention un matériau apte à laisser passer au moins une partie de l'énergie lumineuse auquel il est exposé, suffisante pour réaliser la mesure d'au moins une caractéristique des racines d'une plante. Pour la paroi externe (13) du rhizotron, celle-ci est transparente dès lors que, compte tenu de son épaisseur, ladite paroi transmet une quantité suffisante du signal physique choisi pour réaliser les mesures désirées.

Par «lumière », on entend selon l'invention une énergie lumineuse constituée d'une longueur d'onde, d'une pluralité de longueurs d'ondes ou d'un spectre de longueurs d'ondes, ladite lumière étant comprise dans une gamme de longueurs d'ondes allant de l'infrarouge à l'ultraviolet, par exemple allant de 100 nanomètres à 3000 nanomètres, ce qui inclut la lumière naturelle, et des lumières provenant de sources lumineuses artificielles telles que des lampes à incandescence, des lampes à fluorescence, un faisceau laser ou encore des diodes électroluminescentes. Avantageusement, la paroi externe (13) est, au moins partiellement, transparente à une lumière allant du proche infrarouge au proche ultraviolet, c'est-à-dire dans une gamme de longueurs d'onde allant d'environ 1400 nanomètres à environ 250 nanomètres.

La paroi externe (13) peut être transparente sur seulement une partie de sa surface, c'est-à-dire qu'une partie de sa surface est transparente à la lumière (ou à une autre source d'énergie, p. ex. un rayonnement infrarouge, un rayonnement ultraviolet ou encore des rayons X) et une autre partie de sa surface est, au moins partiellement, opaque à la lumière (ou à ladite autre source d'énergie). Par exemple une partie de la paroi externe (13) peut être totalement opaque à la lumière (ou à ladite autre source d'énergie) du fait de la présence d'un revêtement opaque à la lumière (ou à ladite autre source d'énergie) sur ladite partie de surface de la paroi externe (13), ou du fait que la paroi externe (13) est réalisée avec une pluralité d'éléments de structure, par exemple une structure principale dans un matériau opaque à la lumière (ou à ladite autre source d'énergie), tel que du métal, notamment de l'inox, structure dans laquelle sont pratiquées des ouvertures, par exemple des fenêtres, dans lesquelles sont insérés des éléments réalisés en un matériau transparent à la lumière, par exemple en verre ou en un matériau polymère transparent à la lumière (ou à ladite autre source d'énergie).

Dans certains modes de réalisation du rhizotron selon l'invention, la paroi externe (13) est transparente, au moins sur une partie de sa surface, aux rayons X. Dans ces modes de réalisation, la paroi externe (13) peut, par exemple, être réalisée en un matériau polymère transparent aux rayons X, tel qu'un matériau en une résine de polyester ou en une résine de polystyrène transparente aux rayons X.

Avantageusement, la paroi externe (13) est totalement transparente à la lumière, de manière à, notamment, faciliter la prise d'images de la totalité du réseau racinaire végétal, quelle que soit la surface du substrat occupée par ledit réseau racinaire et quelle que soit la ou les orientation(s) des racines au sein du substrat.

La paroi externe (13) peut être en verre, notamment en verre borosilicate ou encore en un matériau polymère transparent à la lumière tel que du polyméthacrylate de méthyle (PMMA), acrylonitrile butadiène styrène (ABS), du polystyrène du type « cristal », certains polycetals tel que le polyvinylbutyral, du polycarbonate, du Plexiglas® ou encore du polychlorure de vinyle (PVC). La paroi externe (13) peut également être en un matériau composite transparent à la lumière, comme par exemple des composites verre/polymère De préférence, on choisit pour la paroi externe (13) un matériau transparent générant un niveau réduit de réflexion de lumière parasite, de manière à permettre l'acquisition d'images du réseau racinaire de la meilleure qualité possible. Par exemple, on peut utiliser, pour réaliser la paroi externe (13), un matériau transparent comportant à sa surface une ou plusieurs couches de revêtement anti-reflets.

Avantageusement, l'épaisseur de l'espace (11) de propagation racinaire est sensiblement constante. L'épaisseur de l'espace (11) de propagation racinaire peut être notamment comprise entre 1 mm et 50 mm. Avantageusement, l'axe longitudinal de la paroi externe (13) et l'axe longitudinal de la paroi interne (12) sont sensiblement parallèles entre eux.

La dimension radiale de l'espace de propagation racinaire est par exemple d'au moins 1 mm, de manière à disposer d'un espace suffisant pour le développement des réseaux racinaires les plus fins.

La dimension radiale de l'espace de propagation racinaire est de préférence d'au plus 50 mm, de manière à assurer une visibilité du réseau racinaire même lorsque celui-ci est de taille importante (cas des racines tubercules). Cette épaisseur d'au plus 50 mm permet également l'aménagement de séparations internes à l'espace de propagation racinaire permettant de délimiter une pluralité de zones à l'intérieur de celui-ci, telles que i) une zone contenant les racines, ii) une zone contenant le substrat qui peut être en contact direct avec les racines, avec lesquelles les échanges chimiques et micro organiques peuvent s'effectuer, et iii) une zone contenant aussi du substrat ou un autre matériau dont le rôle est d'assurer la réserve en eau à l'intérieur de l'espace de propagation racinaire.

La dimension radiale de l'espace de propagation racinaire (11) doit être adaptée pour permettre la mesure des paramètres utiles à la détermination de la croissance racinaire, tels que le nombre, la disposition spatiale, le diamètre et la longueur des racines.

La dimension radiale de l'espace de propagation racinaire est par exemple comprise entre 1 mm et 50 mm, par exemple entre 2 mm et 10 mm, par exemple de 3 mm environ.

La dimension radiale de l'espace de propagation racinaire doit être adaptée au type de substrat avec lequel ledit espace doit être rempli.

Dans certains modes de réalisation du rhizotron, l'espace de propagation racinaire constitue une zone unique qui est destinée à recevoir le substrat. Dans ces modes de réalisation, la dimension radiale de l'espace de propagation racinaire (11) est préférentiellement d'au plus 20 mm, en particulier lorsque la paroi externe (13) est transparente à la lumière sur au moins une partie de sa surface.

Dans d'autres modes de réalisation du rhizotron, l'espace de propagation racinaire (11) est divisé en une pluralité de zones, chaque zone étant orientée verticalement et étant sensiblement parallèle au plan vertical de la paroi externe (13), les plans verticaux de chacune desdites zones étant sensiblement parallèles entre eux. Dans ces modes de réalisation du rhizotron dans lesquels l'espace de propagation racinaire est divisé en une pluralité de zones, la zone la plus externe est en contact avec la paroi externe (13) et est destinée à contenir les racines de la plante dont les caractéristiques sont étudiées ou mesurées. Selon un premier aspect de ces autres modes de réalisation, la délimitation entre une première zone et une seconde zone de l'espace de propagation racinaire (11) peut être réalisée par un élément de séparation interposé entre lesdites première et seconde zones, par exemple une membrane de séparation, de préférence une membrane perméable aux fluides et aux gaz. Selon un second aspect de ces autres modes de réalisation, la délimitation entre une première zone et une seconde zone ne possède pas d'élément de séparation, par exemple lorsqu'une zone possède une intégrité physique propre, par exemple lorsque cette zone consiste en un support tel qu'un tissu ou une mousse, dont les surfaces délimitent ladite zone et la sépare cette zone de la zone adjacente ou des zones adjacentes.

Ainsi, dans certains modes de réalisation du rhizotron selon l'invention, l'espace de propagation racinaire (11) est divisé en au moins deux zones, respectivement (i) une zone (110) de propagation racinaire et (ii) une zone (111) destinée au stockage d'eau ou de milieu nutritif, étant entendu que des échanges de liquides ou de gaz peuvent avoir lieu entre les zones (110) et (111). Dans ces modes de réalisation particuliers, l'espace de propagation racinaire (11) comprend, de la paroi externe (13) vers la paroi interne (12), respectivement la zone (110) de propagation racinaire puis la zone (111) destinée au stockage d'eau ou de milieu nutritif.

Egalement, dans certains de ces autres modes de réalisation, l'espace de propagation racinaire (11) peut être divisé en plus de deux zones, par exemple en trois zones, respectivement (i) une zone (110) de propagation racinaire, (ii) une zone (112) contenant des microorganismes et (iii) une zone (111) destinée au stockage d'eau ou de milieu nutritif, étant entendu que des échanges liquides ou gazeux peuvent avoir lieu entre les différentes zones, et en particulier entre les zones (110) et (112) ainsi qu'entre les zones (112) et (111). Dans ces modes de réalisation particuliers, l'espace de propagation racinaire (11) comprend, de la paroi externe (13) vers la paroi interne (12), respectivement la zone (110) de propagation racinaire, puis la zone (112) contenant des microorganismes, puis la zone (111) destinée au stockage d'eau ou de milieu nutritif.

Dans certains modes de réalisation du rhizotron dans lesquels l'espace de propagation racinaire (11) comprend une pluralité de zones, une première zone peut être séparée d'une seconde zone par l'interposition d'un élément de séparation entre les deux zones, par exemple une feuille ou une membrane perméable aux liquides et/ou aux gaz. Par exemple, dans ces modes de réalisation, une membrane de séparation (113) est interposée entre les zones (110) et (111). L'élément de séparation (113) permet de séparer physiquement les zones (110) et (111) sans empêcher les échanges de liquides et/ou les échanges gazeux entre ces deux zones. A titre illustratif, l'élément de séparation (113) peut être une membrane filtrante ayant une taille de pore adaptée pour laisser passer les gaz, les liquides, et le cas échéant les microorganismes. On peut par exemple utiliser une membrane filtrante ayant une taille moyenne de pores de 37 µm, d'un type connu.

Dans certains modes de réalisation du rhizotron dans lesquels l'espace de propagation racinaire (11) comprend une pluralité de zones, une première zone peut être séparée d'une seconde zone sans requérir la présence d'un élément de séparation spécifique interposé entre ces deux zones. C'est le cas notamment lorsqu'une zone possède une délimitation physique *per se,* par exemple lorsque ladite zone se présente sous la forme d'un support ayant une cohésion physique. A titre illustratif, une zone constituée par un support ayant une cohésion physique englobe les supports poreux tels qu'une feuille, un tissu ou encore une mousse, ledit support pouvant contenir, selon les modes de réalisation de l'espace de propagation (11), par exemple de l'eau, un liquide nutritif pour les plantes, des microorganismes ou un milieu contenant des microorganismes.

Dans certains modes de réalisation du rhizotron dans lesquels l'espace de propagation racinaire (11) comprend une pluralité de zones, le substrat peut se présenter sous la forme d'une zone particulière localisée du côté de la paroi externe (13), qui est destinée à être au contact des racines de la plante, mais à l'intérieur duquel les racines ne pénètrent pas. Par exemple, dans ces modes de réalisation, le substrat peut consister en une couche de matériau inerte imprégné de liquide nutritif, et contenant le cas échéant des microorganismes, les racines se propageant au contact dudit substrat mais à la surface de celui-ci, lesdites racines étant par ailleurs au contact de la paroi externe (13).

De préférence, la dimension radiale de l'espace de propagation racinaire (11) du rhizotron doit permettre un remplissage aisé avec le matériau substrat. Notamment, lorsqu'un substrat solide particulaire est utilisé, la dimension radiale de l'espace de propagation racinaire est avantageusement au moins deux fois la taille granulométrique dudit substrat.

La faible épaisseur du substrat, dans l'espace (11) de propagation racinaire, permet aux racines d'être visibles le long de la paroi externe, ce qui permet leur caractérisation aisée par prise d'image tout en étant en contact direct avec le substrat.

La variante du rhizotron dans laquelle l'espace de propagation racinaire (11) comprend une pluralité de zones et dans laquelle les racines sont interposées entre (i) la paroi externe (13) et (ii) une zone de substrat, est une variante qui permet une prise de vue optimale des racines (qui seront entièrement visibles) mais physiquement séparées du substrat. Dans cette variante particulière du rhizotron, seule une solution aqueuse permet la diffusion des microorganismes éventuellement présents et des éléments chimiques de la zone de propagation racinaire à la zone de substrat.

Selon une autre variante, le rhizotron (10) est pourvu d'un système permettant, le cas échéant à des instants choisis, de déplacer l'ensemble du réseau racinaire vers la paroi externe (13) afin (i) de simuler la pression exercée par le sol lorsqu'une plante est cultivée en pleine terre, (ii) si nécessaire combler un vide dans l'espace de propagation racinaire (11) lorsqu'il manque du matériau substrat, (iii) d'accroître la visibilité des racines et ainsi d'améliorer les conditions de caractérisation du réseau racinaire, par exemple par prise d'image.

Selon cette variante, le rhizotrons (10) comprend, à l'intérieur de l'espace de propagation racinaire (11), au moins une poche déformable (114). Une poche déformable (114) est délimitée par une enveloppe dont la face externe est en contact avec l'environnement extérieur et la face interne délimite une lumière interne de la poche déformable. La poche déformable (114) est de forme aplatie et est localisée dans l'espace de propagation racinaire (11), dont le gonflage entraîne une compression du réseau racinaire qui est ainsi déplacé vers la paroi externe (13). Avantageusement, la poche déformable est dimensionnée de manière à comprendre deux faces principales sensiblement parallèles définissant un plan vertical, ledit plan vertical étant lui-même sensiblement parallèle au plan des parois interne (12) et externe (13) du rhizotron (10). Les deux faces principales de la poche déformable (114) une première face orientée vers la paroi interne (12) du rhizotron (10) et une seconde face orientée vers la paroi externe (13) du rhizotron (10), avec au moins la seconde face orientée vers la paroi externe (13) qui possède une surface suffisante pour couvrir la surface occupée par le réseau racinaire d'une plante cultivée dans le rhizotron (10). Avantageusement, la poche déformable (114) possède, lorsque celle-ci est dégonflée, une épaisseur réduite, par exemple de quelques millimètres à quelques centimètres. Par définition, l'épaisseur de la poche déformable à l'état dégonflé est sensiblement inférieure à la dimension radiale de l'espace de propagation racinaire (11) du rhizotron (10). Avantageusement, la poche déformable (114), lorsque celle-ci est à l'état dégonflé, possède une épaisseur d'au plus 40 mm, ce qui englobe une épaisseur d'au plus 35 mm, d'au plus 30 mm, d'au plus 25 mm ou encore d'au plus 20 mm. Avantageusement, la hauteur de la poche déformable (114) est sensiblement égale à la hauteur de l'espace de propagation racinaire (11).

Dans certains modes de réalisation, un rhizotron (10) comprend une pluralité de poches déformables (114) telles que décrites ci-dessus, par exemple un nombre de poches déformables (114) égal au nombre de logements (45) destinés à recevoir une semence de plante, lesquels logements (45) sont décrits plus loin dans la présente description.

Dans certains modes de réalisation, la poche déformable (114) est cylindrique de révolution et est coaxiale avec la paroi interne (12), ou est coaxiale avec la paroi externe (13), ou est coaxiale à la fois avec la paroi interne (12) et avec la paroi externe (13) du rhizotron (10). Dans ces modes de réalisation, le rhizotron (10) comprend une seule poche déformable (114), laquelle, lorsqu'elle est à l'état gonflé, peut exercer une pression sur la totalité de l'espace de propagation racinaire (11).

La poche déformable (114) comporte au moins un moyen permettant son remplissage par un fluide pour son gonflage et, le cas échéant, un moyen distinct permettant son dégonflage. Avantageusement, la poche déformable (114) comporte au moins un orifice (115) pratiqué dans sa paroi, lequel orifice permet le passage d'un fluide liquide ou gazeux vers l'intérieur de la poche déformable ou vers l'extérieur de la poche déformable. Avantageusement, l'orifice (115) est muni d'une valve (116) permettant de commander l'entrée ou la sortie d'un fluide liquide ou gazeux dans la poche déformable (114). Avantageusement, la valve (116) est connectée à une première extrémité d'une tubulure (117), avec la seconde extrémité (118) de la tubulure qui est connectée à un générateur d'un fluide liquide ou gazeux sous pression, ledit fluide liquide ou gazeux étant destiné à gonfler la poche déformable (114).

La paroi de la poche déformable (114) est réalisée en un matériau déformable, par exemple en latex, en un matériau polymère naturel ou synthétique ou encore en une feuille métallique d'épaisseur réduite. Par exemple, la paroi de la poche déformable (114) peut être réalisée en un matériau choisi dans le groupe formé par du polyéthylène, du polyéthylène téréphtalate, du polychlorure de vinyle, du polypropylène, du polyacrylonitrile, du polyamide, du polyester, du chlorure de poly(éthylène/acétate de vinyle), du poly(éthylène/alcool vinylique), du polyacrylonitrile, de l'aluminium, un polyamide, ou encore une combinaison de ces matériaux. Dans certains modes de réalisation, la paroi de la poche déformable (114) est réalisée à partir d'une feuille constituée d'une couche d'un seul matériau, par exemple une couche d'un matériau choisi parmi les matériaux cités ci-dessus. Dans certains autres modes de réalisation, la paroi de la poche déformable peut être du type multi-couches, c'est-à-dire que la paroi de la poche déformable peut comprendre une pluralité de couches réalisées dans des matériaux distincts, par exemple dans des matériaux choisis parmi ceux cités ci-dessus.

Le générateur de fluide liquide ou gazeux sous pression peut être de types variés. Dans certains modes de réalisation, il peut être un générateur de liquide sous pression, de préférence de l'eau ou liquide aqueux, comme par exemple un circuit de distribution d'eau potable.

De préférence, le générateur consiste en un générateur de fluide gazeux sous pression, comme par exemple une pompe de compression alimentée par l'air atmosphérique, ou bien un récipient comprenant un gaz sous pression, préférentiellement un gaz non-inflammable sous pression, tel que de l'air, du dioxyde de carbone ou encore de l'azote. Ledit récipient peut comprendre le fluide gazeux sous pression sous forme liquide ou sous forme gazeuse.

Selon cette variante du rhizotron (10), la poche déformable (114) peut-être maintenue dans un état dégonflé pendant l'essentiel de la durée de culture de la ou des plante(s) présente(s) dans le rhizotron, et être maintenu dans un état gonflé pendant la durée nécessaire à la mesure de la ou des caractéristique(s) phénotypique(s) de la ou des plante(s) considérée(s).

Une poche déformable (114) peut être contenue dans divers variantes du rhizotron décrites dans la présente demande de brevet. En particulier, une poche déformable (114) peut être contenue dans un rhizotron dont l'espace de propagation racinaire (11) comporte une pluralité de zones, ce qui inclut un rhizotron dont l'espace de propagation racinaire (11) comprend une pluralité de zones et dans lequel au moins deux zones sont séparées entre elles par une membrane filtrante.

La disposition spécifique du rhizotron permet l'acquisition répétée d'images des racines, sans nécessiter leur manipulation ni de contact physique avec celles-ci, c'est-à-dire sans affecter le développement normal du réseau racinaire dans l'espace dédié.

Les parois externe (13) et interne (12) sont avantageusement tubulaires, et de préférence cylindriques de révolution. Ce mode de réalisation permet une adaptation accrue du rhizotron aux systèmes connus de phénotypage des parties aériennes des plantes, par exemple des systèmes comportant des convoyeurs et un habitacle d'acquisition d'images. Ce mode de réalisation permet l'obtention d'une grande surface disponible pour l'observation du développement racinaire pour un encombrement au sol réduit.

La paroi interne (12) est en un matériau choisi parmi un métal, ou un matériau polymère d'origine naturelle ou synthétique, par exemple une matière plastique tissée ou en matière plastique non tissée. Les matières plastiques tissées englobent certains tissus polymères tels que les tissus de nylon ou les tissus de propylène. Ces tissus englobent les tissus de nylon ou de propylène ayant une taille de pore de 37 µm, lesquels peuvent utilisés dans certains domaines industriels comme membranes filtrantes. Les matières plastiques non tissées englobent les matériaux polymères de polyméthacrylate de méthyle (PMMA), de polycarbonate ou encore de polychlorure de vinyle (PVC). La hauteur de l'espace de propagation racinaire doit être suffisante pour permettre le développement normal du réseau racinaire des plantes sans que les extrémités des racines où est localisée la coiffe, c'est-à-dire la zone de multiplication cellulaire, atteignent l'extrémité inférieure de l'espace de propagation racinaire.

Avantageusement, la hauteur (H) de l'espace de propagation racinaire est d'au moins 200 mm, ce qui englobe au moins 250 mm, au moins 300 mm, au moins 350 mm, au moins 400 mm, et au moins 450 mm.

Un rhizotron dont la hauteur (H) de l'espace de propagation racinaire est inférieure à 200 mm fait partie de l'invention, mais n'est pas un mode de réalisation préféré, du fait qu'un tel mode de réalisation n'est pas adapté au phénotypage de plantes ayant un réseau racinaire de grande longueur.

Un rhizotron dont la hauteur (H) de l'espace de propagation racinaire est supérieure à 700 mm fait partie de l'invention, mais ne constitue pas un mode de réalisation préféré.

A titre illustratif, un rhizotron selon l'invention dont la hauteur (H) de l'espace de propagation racinaire est choisie dans une gamme variant d'environ 400 mm à 500 mm a des dimensions adaptées à une utilisation dans des systèmes connus, utilisés pour le phénotypage des parties aériennes des plantes. Egalement, le poids d'un tel rhizotron est parfaitement approprié pour son utilisation dans les systèmes de phénotypage précités.

Le rhizotron facilite la prise d'image en permettant une rotation du rhizotron sur lui-même au cours de l'acquisition des images, ou entre les images.

Le transport du rhizotron peut s'effectuer facilement, car la position sélectivement centrée et basse du centre de gravité du rhizotron accroît sa stabilité, lors d'un convoyage.

Le rhizotron comporte avantageusement plusieurs logements (45) pour recevoir plusieurs semences de plantes, notamment deux logements (45) diamétralement opposés, ou bien trois logements (45) régulièrement espacés les uns par rapport aux autres. En général, un logement (45) est prévu pour recevoir une seule semence de plante.

Le rhizotron peut comporter, pour chaque logement (45), une cloche (50) fixée de manière amovible sur le rhizotron, de préférence par vissage, agencée pour isoler la partie aérienne de la plante. Ce mode de réalisation est spécialement adapté pour la culture des plantes étudiées dans un environnement stérile ou dans un environnement où la composition de la flore bactérienne ou fongique est contrôlée. La cloche (45) évite ou au moins réduit également les risques de dessèchement des parties aériennes des plantules après la germination, qui est un stade très sensible pour certaines espèces de plantes.

Dans ce mode de réalisation, la ou les plantes étudiées peuvent être cultivées dans des conditions gnotobiotiques, c'est-à-dire dans un environnement isolé de l'extérieur et contrôlé, et en particulier en présence d'une flore bactérienne ou fongique connue, en particulier choisie.

Le rhizotron peut comporter une réserve de liquide au moins partiellement contenue dans un réservoir situé à l'intérieur du rhizotron, ce réservoir étant de préférence au moins partiellement défini par un tube (20) s'étendant longitudinalement sur une partie au moins de la hauteur du rhizotron.

Le rhizotron peut comporter une membrane filtrante (60) apte à empêcher l'entrée de microorganismes de l'environnement extérieur au dispositif vers l'espace interne, notamment des bactéries et des champignons. La membrane filtrante peut être notamment un filtre de type connu ayant une taille de pore de 0,22 µm.

La membrane filtrante (60) est apte à éliminer les microorganismes, notamment bactéries et champignons, lors du passage du liquide de la réserve de liquide vers l'espace (11) de propagation racinaire, que l'espace (11) de propagation racinaire soit constitué d'une seule zone ou qu'il comprenne une pluralité de zones.

Le rhizotron peut comporter une masse (16) d'un matériau poreux disposée en amont de l'espace de propagation racinaire (11) vis-à-vis de la circulation du liquide vers le substrat.

Le rhizotron peut comporter en partie inférieure un socle démontable (25).

Le rhizotron est de préférence pourvu d'un orifice de drainage (70) en partie inférieure, de préférence un orifice de drainage relié à un clapet de vidange (71).

Le ou les logements (45) destinés à recevoir la ou les semences (S) sont de préférence réalisés sur une platine (35) surmontant les parois interne (12) et externe (13).

Le rhizotron peut être équipé d'un dispositif occultant amovible (80), pouvant être disposé autour de la paroi externe pour la protéger de la lumière et être abaissé ou enlevé pendant l'observation des racines. Selon ce mode de réalisation avantageux, les racines végétales sont placées dans l'obscurité durant la presque totalité de la durée d'un essai, à l'exception de la durée nécessaire à l'acquisition d'une image du réseau racinaire, pendant laquelle le dispositif occultant est abaissé ou enlevé afin d'exposer la paroi externe (13) du rhizotron à une source lumineuse et acquérir l'image du réseau racinaire. Immédiatement après l'acquisition d'une image du réseau racinaire, le dispositif occultant peut être relevé ou rapporté de manière à placer à nouveau le système racinaire dans l'obscurité jusqu'à un moment choisi, par exemple jusqu'à une étape ultérieure d'acquisition d'une image.

Une forme tubulaire ou conique des parois interne (12) et externe (13), et de préférence cylindrique de révolution, est avantageuse car elle permet d'augmenter la surface de culture et d'observation, par rapport à un rhizotron plan, tout en ayant un encombrement réduit. Une forme cylindrique de révolution est tout particulièrement préférable car elle évite la présence de zones de culture difficilement exploitables telles que des bordures ou des angles. De plus, une forme tubulaire ou conique, par exemple cylindrique de révolution, des parois interne (12) et externe (13) est similaire à la forme des pots de culture de plantes conventionnels, notamment ceux qui sont couramment utilisés dans les systèmes connus de phénotypage des parties aériennes des plantes. Egalement, une forme tubulaire ou conique des parois interne (12) et externe (13) permet au rhizotron de disposer d'un point de gravité centré sur l'axe longitudinal central du dispositif, ce qui facilite le transport du rhizotron dans des systèmes de convoyage, sans risque de chute du rhizotron ou sans risque de blocage du système de convoyage.

De préférence, le diamètre de la base inférieure du rhizotron, ou embase, est compatible avec son utilisation dans des systèmes de convoyage de pots pour la culture de plantes, notamment dans des systèmes utilisés pour le phénotypage de plantes. Le diamètre de l'embase du rhizotron peut par exemple varier de 10 cm à 50 cm.

De préférence, le socle (25) du rhizotron comporte des passages (400) pour une partie filetée (401), permettant la fixation du socle sur une embase (402) d'un système de convoyage.

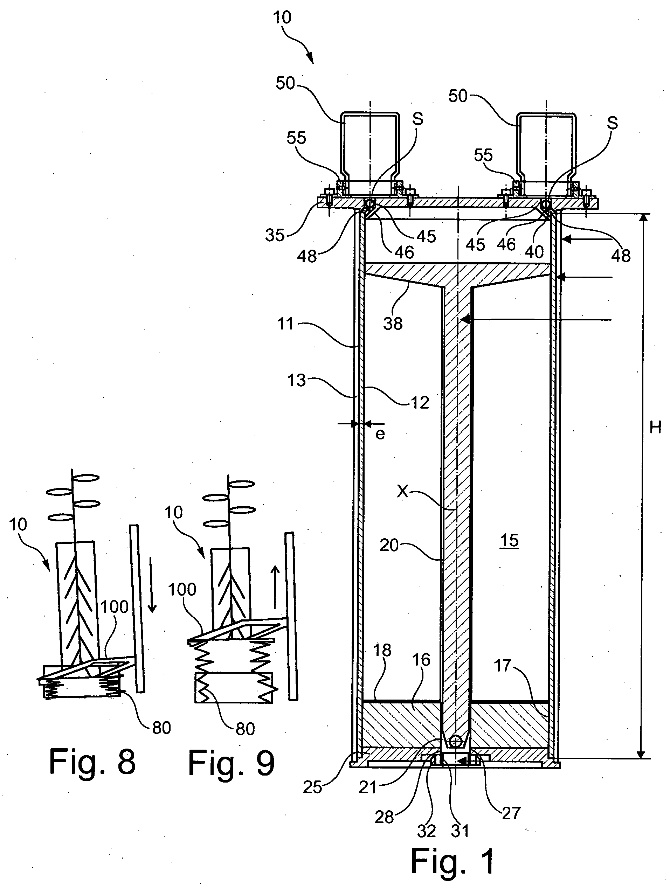

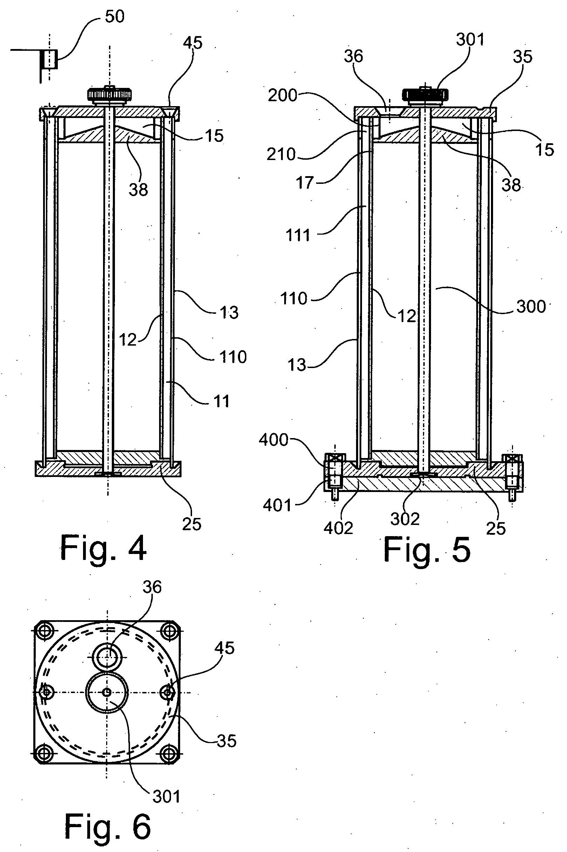

Le rhizotron comporte de préférence une ouverture d'introduction de liquide en partie supérieure, un tel dispositif étant ainsi adapté à l'utilisation d'une station d'arrosage automatique. Selon certaines variantes, l'ouverture d'introduction de liquide communique avec un réservoir tubulaire localisé dans la partie centrale du rhizotron, comme cela est par exemple illustré dans la figure 1. Selon d'autres variantes, l'ouverture d'introduction de liquide communique avec un réservoir localisé dans la partie supérieure du rhizotron, la base dudit réservoir étant conique, ce qui permet une répartition de l'eau ou du liquide nutritif sur le pourtour du Rhizotron, au contact de la paroi interne (12), laquelle communique avec la réserve de liquide du rhizotron, comme cela est illustré dans les variantes de rhizotron représentée sur les figures 4, 5 et 7.

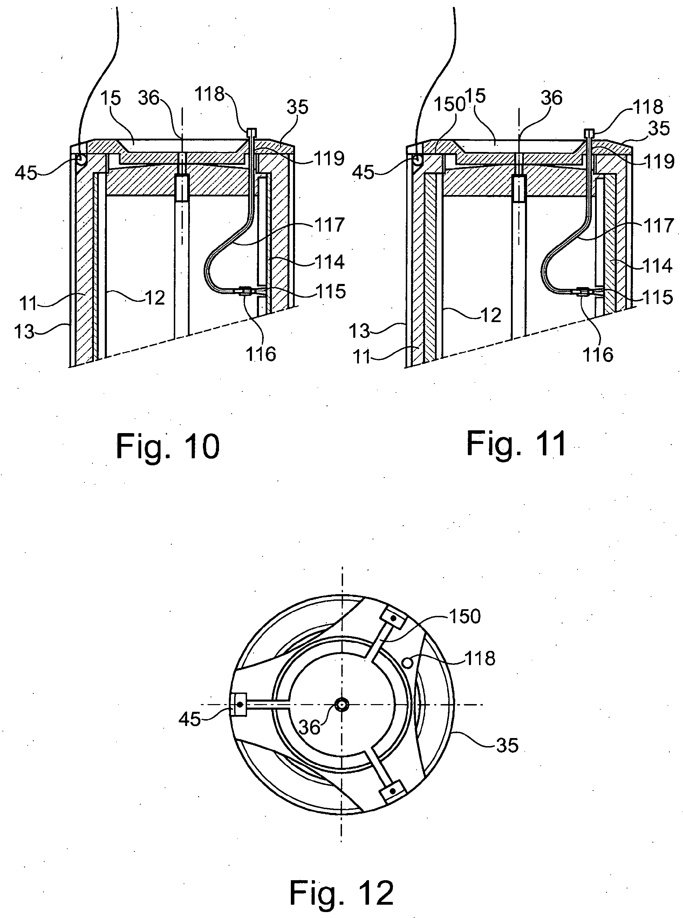

Certaines variantes dans lesquelles l'espace (15) pour la réserve de liquide est localisé dans la partie supérieure du rhizotron sont représentées sur les figures 10, 11, 12 et 13. Dans ces variantes du rhizotron, l'espace (15) pour la réserve de liquide se présente sous la forme d'une chambre localisée dans la partie supérieure du rhizotron. Le cas échéant l'espace (15) est localisé dans la platine (35). L'espace (15) pouvant contenir la réserve de liquide est en communication fluidique avec un logement (45) pour semence de plante par l'intermédiaire d'un canal (150). Dans ces variantes du rhizotron, l'alimentation en liquide des graines germées ou des plantes adultes est régulé. Dans certains modes de réalisation, la dimension transversale du canal (150), le cas échéant le diamètre dudit canal lorsque celui-ci est de forme cylindrique, peut être constant. Dans certains autres modes de réalisation, la dimension transversale du canal (150), le cas échéant le diamètre dudit canal lorsque celui-ci est de forme cylindrique, peut être variable. Dans ces derniers modes de réalisation un effet Venturi est généré avec l'écoulement du liquide, lequel permet une régulation du débit de liquide provenant de l'espace (15).

Dans certains modes de réalisation tels que celui représenté à la figure 1, la réserve de liquide contenue dans le rhizotron permet d'alimenter le substrat en liquide par capillarité.

Dans d'autres modes de réalisation du rhizotron, en particulier les modes de réalisation pour lesquels l'espace de propagation racinaire (11) comprend une pluralité de zones incluant une zone de substrat, l'alimentation en liquide de la zone de propagation racinaire peut être réalisée à partir de la zone de l'espace de propagation racinaire localisée vers l'intérieur du rhizotron, au contact de la paroi interne (12).

Dans certains modes de réalisation du rhizotron du type de celui illustré dans la figure 1, l'alimentation en liquide du substrat s'effectue depuis la partie inférieure du rhizotron. Par exemple, le liquide est amené au substrat en un ou plusieurs emplacements qui sont positionnés dans le premier quart de la hauteur totale du substrat.

De préférence, la réserve de liquide occupe un espace dont le centre se confond avec l'axe longitudinal central du rhizotron.

La réserve de liquide peut être vidée, notamment par gravité au travers d'un orifice de sortie, avantageusement localisé au niveau de la base inférieure du rhizotron et dont l'ouverture et la fermeture peut être commandée ou contrôlée.

Dans d'autres modes de réalisation, la réserve de liquide est localisée dans la partie supérieure du rhizotron, comme cela est représenté par exemple dans les figures 4, 5 et 7. Dans ces modes de réalisation, le réservoir de liquide est délimité par (i) la paroi interne du couvercle, (ii) la base (38) du réservoir et (ii) la paroi interne (12). Dans ces modes de réalisation, la base (38) du réservoir a préférentiellement une forme conique. Dans ces modes de réalisation, la partie de la paroi interne (12) délimitant le réservoir et en contact avec celui-ci comporte des orifices (17) permettant le passage du liquide à partir du réservoir vers l'espace de propagation racinaire (11), par exemple vers une zone (111) de stockage du liquide dans les modes de réalisation dans lesquels ledit espace de propagation racinaire (11) comprend une pluralité de zones. Dans ces modes de réalisation, le liquide circule latéralement du réservoir vers l'espace de propagation racinaire.

Avantageusement, le rhizotron de l'invention a un poids compatible avec son utilisation avec des systèmes de convoyage adaptés, y compris les systèmes de convoyage précités. Le rhizotron de l'invention a avantageusement un poids inférieur à 20 kg, par exemple un poids inférieur à 15 kg.

L'invention a encore pour objet, selon un autre de ses aspects, un procédé pour la détermination d'au moins une caractéristique phénotypique des racines de plante, comprenant les étapes suivantes :
a) fournir au moins un rhizotron selon l'invention, contenant au moins une plante,
b) exposer le rhizotron à une source d'énergie, notamment une source de lumière,
c) collecter un signal émis en retour soit réfléchi, soit transmis.
d) déterminer une ou plusieurs caractéristiques phénotypiques racinaires de la plante à partir du signal collecté à l'étape c).

Le procédé ci-dessus est un procédé de phénotypage racinaire de plantes.

La source d'énergie peut être une source d'énergie lumineuse ayant un spectre couvrant une longueur d'onde, une pluralité de longueurs d'onde, ou une gamme ou spectre de longueurs d'onde, allant de 100 nm à 3000 nm, notamment de 250 nm à 1400 nm.

Le signal peut être collecté sous la forme d'une image de l'organe racinaire d'une plante.

Pour la mise en oeuvre du procédé de phénotypage ci-dessus, on fournit à l'étape a) au moins un rhizotron de l'invention dont l'espace (11) de propagation racinaire, ou la zone appropriée dudit espace de propagation racinaire, a été empli avec une quantité adaptée de substrat, par exemple de terre, de terreau, de sable ou encore d'un mélange d'au moins deux de ces derniers, et dans au moins des logements (45) duquel au moins une semence ou une plantule a été placée, et à germé en une plante.

Dans certains modes de réalisation, on place dans l'un au moins des logements (45) une semence ou une jeune plantule.

La réserve de liquide du rhizotron fourni à l'étape a) peut être au moins partiellement emplie d'eau ou d'un liquide nutritif.

L'étape b) peut être réalisée dans une enceinte ou cabine spécialement conçue pour le phénotypage des parties aériennes des plantes. Par exemple, le rhizotron peut être placé dans une enceinte conçue pour l'acquisition d'images, laquelle est pourvue de (i) au moins une source d'énergie lumineuse, notamment une source de lumière naturelle ou une source de lumière artificielle, telle qu'une lampe à incandescence, une lampe halogène ou encore une lampe à fluorescence et de (ii) au moins un dispositif d'acquisition d'images.

Aux étapes b) et c), on peut notamment utiliser un dispositif d'acquisition d'images qui peut être un dispositif numérique de prise de vues, tel qu'un appareil photographique numérique ou une caméra numérique, muni d'un capteur numérique d'un type quelconque, par exemple du type CCD (pour « Charge Couple Device ») ou CMOS (pour « Complementary Metal Oxide Semi-conductor »).

Le dispositif d'acquisition d'images peut être relié à l'unité centrale d'un calculateur numérique. Les données numériques des images peuvent être, au moins temporairement, conservées dans un moyen de stockage des données inclus dans le calculateur numérique.

Pour réaliser la mesure d'au moins une caractéristique phénotypique des racines d'une plante, à l'étape d) du procédé ci-dessus, les données numériques des images sont avantageusement transférées, au moins temporairement, dans un moyen de stockage des données, notamment une mémoire numérique d'un type connu, afin d'être traitées de manière appropriée.

En général, pour la mesure d'au moins une caractéristique phénotypique des racines d'une plante à partir des données contenues dans le fichier d'une image numérique, la mémoire du calculateur numérique est chargée avec un programme d'ordinateur contenant une suite d'instructions d'analyse d'images. En exécutant un tel programme d'ordinateur à partir de données numériques des images des racines de plantes, on mesure au moins une caractéristique phénotypique de la plante photographiée ou filmée, tels que (i) la surface du réseau racinaire, (ii) le nombre de racines, notamment le nombre de racines de premier ordre, de second ordre, etc. (iii) le cas échéant la présence, le nombre ou la localisation de racines latérales, (iv) le nombre de nodules racinaires, (v) la longueur des racines, (v) le diamètre des racines, ou encore (vi) les caractéristiques physico-chimiques des racines vii) le mode d'organisation ou viii) les caractéristiques de couleur et de formes.

Pour réaliser la mesure d'au moins une caractéristique phénotypique d'une plante, on peut utiliser un programme de traitement numérique connu, par exemple un programme d'ordinateur tel que le programme WinRhizo® commercialisé par la société Regent Instruments Inc. (Canada).

La source d'énergie, par exemple une source de lumière artificielle, émet un faisceau qui couvre au moins une partie, et si possible la totalité, de la surface de la paroi externe (13) du rhizotron qui est exposé à ladite source.

Le capteur d'énergie réfléchie, par exemple une caméra du type CCD ou du type CMOS, est dirigé de manière à recevoir au moins une partie, de préférence la totalité, de l'énergie réfléchie par l'espace de propagation racinaire du rhizotron.

Le signal reçu par le capteur est transformé en une image

Selon encore un autre aspect, la présente invention est relative à un procédé de détermination d'au moins une caractéristique phénotypique de plantes comprenant les étapes suivantes :
a) disposer une pluralité de rhizotrons tels que définis dans la présente description, aussi appelés ensemble de rhizotrons, avec un ou plusieurs rhizotrons contenant au moins une plante, chaque rhizotron étant placé sur un support mobile, par exemple sur un support mobile placé sur une chaîne de convoyage,
b) réaliser un déplacement de l'ensemble de rhizotrons par translation des rhizotrons sur la chaîne de convoyage jusqu'à placer au moins un des rhizotrons devant un dispositif d'acquisition d'images des racines de la plante ou des plantes disposée(s) dans ledit rhizotron,
c) acquérir une image des racines de ladite plante ou desdites plantes,
d) répéter les étapes b) et c).

A l'étape a), le nombre de rhizotrons peut varier considérablement, selon le type d'essai de phénotypage recherché. Le principal paramètre limitant, concernant le nombre de rhizotrons susceptibles d'être disposés à l'étape a), est la longueur de la chaîne de convoyage ou la taille de l'enceinte dans laquelle la chaîne de convoyage est placée. La chaîne de convoyage peut être notamment à bande ou à rouleaux. La chaîne de convoyage peut être entrainée par un moteur, notamment relié à un moyen de contrôle ou de commande. Le moyen de contrôle ou de commande peut être lui-même relié à un calculateur numérique, notamment dans la mémoire duquel peut être chargé un programme, c'est-à-dire une suite d'instructions logiques, contrôlant le déplacement de la chaîne de convoyage.

A titre illustratif, plusieurs centaines de rhizotrons, notamment plus de mille rhizotrons, peuvent être disposés sur la chaîne de convoyage.

A l'étape a), tous les rhizotrons disposés sur la chaîne de convoyage peuvent contenir au moins une plante, ou bien seulement certains d'entre eux contiennent au moins une plante. Au moins un des rhizotrons contient au moins une plante.

A la première occurrence de l'étape b), les rhizotrons sont déplacés sur une distance appropriée pour localiser un rhizotron devant un dispositif d'acquisition d'images. A chaque réitération de l'étape b), les rhizotrons sont déplacés d'une distance appropriée pour qu'un rhizotron placé derrière le rhizotron pour lequel une image a été acquise à l'occurrence précédente de l'étape b), dans le sens du déplacement des rhizotrons sur la chaîne de convoyage, soit localisé devant le dispositif d'acquisition d'images. Un second rhizotron placé « derrière » un premier rhizotron peut être le rhizotron placé immédiatement derrière ledit premier rhizotron, dans le sens du déplacement des rhizotrons sur la chaîne de convoyage. Egalement, un ou plusieurs rhizotrons peuvent être intercalés entre ledit premier rhizotron et ledit second rhizotron qui est placé derrière celui-ci, ce qui signifie que des images peuvent être acquises pour tous les rhizotrons disposés sur la chaîne de convoyage, ou pour seulement certains d'entre eux.

Dans des modes de réalisation spécifiques du procédé ci-dessus, un ou plusieurs des rhizotrons contiennent plus d'une plante, par exemple deux ou trois plantes. Dans ces modes de réalisation, l'étape c) du procédé peut comprendre l'acquisition de plusieurs images des racines de plante, par exemple au moins une image pour les racines de chacune des plantes que contient le rhizotron. Dans ce mode de réalisation du procédé, l'étape c) comporte avantageusement une ou plusieurs sous-étapes au cours desquelles est opérée une rotation du rhizotron, appropriée pour placer successivement le réseau racinaire de chacune des plantes contenues dans le rhizotron en face du dispositif d'acquisition d'images et acquérir ainsi au moins une image pour les racines de chacune des plantes contenues dans le rhizotron.

Dans certains modes de réalisation du procédé, le rhizotron peut être placé sur un support mobile constitutif d'un système de culture sur tablettes. Dans ces modes de réalisation, les rhizotrons peuvent être déplacés manuellement jusqu'aux caméras de phénotypage ou alternativement on utilise une caméra mobile permettant de phénotyper les plantes contenues dans les rhizotrons rhizotrons sans déplacer ces derniers.

Si des rhizotrons pourvus d'un dispositif occultant sont utilisés, la gaine occultante est abaissée ou enlevée à l'étape c) du procédé, préalablement à l'acquisition de la première image des racines de plante, puis est relevée ou re-disposée subséquemment à l'acquisition de la dernière image.

Avantageusement, les étapes b) et c) sont réitérées un nombre de fois suffisant pour qu'au moins une image soit acquise pour au moins un plante contenue dans chacun des rhizotrons disposés sur la chaîne de convoyage.

Pour la réalisation d'un essai de phénotypage permettant de déterminer l'évolution dans le temps d'au moins une caractéristique phénotypique des racines d'une plante, les étapes b) et c) sont réitérées un nombre de fois suffisant pour qu'une pluralité d'images des racines de la même plante, notamment au moins deux images des racines de la même plante, à des instants suffisamment espacés dans le temps, soient acquises au cours de l'essai.

Dans certains modes de réalisation du procédé, celui-ci est réalisé en continu. A titre illustratif, dans les modes de réalisation du procédé dans lesquels environ mille rhizotrons selon l'invention sont disposés sur la chaîne de convoyage, la réitération des étapes c) et d) peut être effectuée, notamment en utilisant les systèmes connus et utilisés aujourd'hui pour le phénotypage des parties aériennes de plantes, à raison d'un cycle d'acquisition d'image pour la totalité des plantes contenues dans la totalité des rhizotrons, à chaque intervalle de temps de 24 heures ou moins.

Pour réaliser un procédé de phénotypage racinaire de plantes mettant en oeuvre des rhizotrons de l'invention, on peut notamment utiliser des systèmes de phénotypage de plantes connus.

Dans d'autres modes de réalisation du procédé, celui-ci est mis en oeuvre de manière discontinue, c'est-à-dire avec un intervalle de temps choisi entre :
(i) la réalisation d'une première série de réitérations des étapes b) et c) du procédé, au cours de laquelle peut être acquise une première série d'images des racines des plantes contenues dans au moins certains des rhizotrons disposés sur la chaîne de convoyage, et
(ii) la réalisation d'une seconde série de réitérations des étapes b) et c) du procédé, au cours de laquelle peut être acquise une seconde série d'images des racines d'au moins une partie des plantes pour lesquelles au moins une image a été acquise précédemment.

Le procédé ci-dessus, qui met en oeuvre des rhizotrons tels que définis dans la présente description, rend possible la détermination d'au moins une caractéristique phénotypique des racines de plantes, notamment la détermination d'une pluralité de caractéristiques phénotypiques de plantes, pour un grand nombre de plantes, par exemple jusqu'à plusieurs centaines de plantes, de manière partiellement ou totalement automatisée.

Le procédé ci-dessus est avantageusement réalisé dans un environnement contrôlé, notamment dans une enceinte, par exemple une serre, dont les paramètres environnementaux tels que la température, la durée et le degré d'exposition à la lumière, ou encore l'hygrométrie de l'air, sont précisément contrôlés.

Le phénotypage racinaire à grande échelle qui est permis par l'invention rend notamment possible un phénotypage à haut débit des interactions entre système racinaire de plantes et microorganismes, et tout spécialement les microorganismes telluriques.

Le phénotypage racinaire à haut débit qui est permis par l'invention peut être réalisé dans le cadre d'études de la physiologie des racines de plantes auxquelles peuvent être associés parallèlement des essais de détermination des caractéristiques génétiques des plantes phénotypées, par exemple des essais mettant en oeuvre des méthodes d'étude de génétique quantitative ou d'association.

Notamment, il peut être recouru aux procédés de phénotypage des racines de plantes, rendus possibles par le rhizotron de l'invention, dans des méthodes de sélection de plantes de caractéristiques spécifiques ou améliorées, par exemple pour la sélection de plantes ayant une capacité accrue à fixer l'azote ou une aptitude accrue à croître dans des substrats de culture de faible niveau hygrométrique.

Comme cela a déjà été mentionné précédemment, le rhizotron peut disposer de moyens permettant l'isolement de la plante, ou des plantes, qu'il contient, vis-à-vis de l'environnement extérieur. En particulier, le rhizotron peut comporter, pour chaque logement (45), une cloche (50) fixée de manière amovible sur le rhizotron. Egalement, le rhizotron, dans les modes de réalisation dans lesquels celui-ci est pourvu d'une réserve de liquide, peut comporter une membrane filtrante (60) disposés sur le trajet du liquide entre le tube central (20) et le substrat contenu dans l'espace (11) de propagation racinaire.

La cloche (50) permet d'isoler la partie aérienne d'une plante de l'environnement extérieur. La membrane filtrante permet de créer une barrière physique (partielle ou totale) au mouvement des microorganismes entre le liquide initialement contenu dans le réservoir du rhizotron et le substrat et/ou l'espace (11) de propagation racinaire.

A titre illustratif, pour cultiver des plantes dans un rhizotron de l'invention dans des conditions gnotobiotiques, une cloche (50) peut être fixée, par exemple vissée, sur chaque logement (45), étant entendu qu'une graine, par exemple une graine pré-germée, a été disposés dans au moins un logement (45) du rhizotron. Avantageusement la ou les cloche(s) (45) est (sont) fixée(s) au rhizotron lorsque la plante a atteint le stade de plantule. Le cas échéant, après une durée de culture suffisante pour que la plante atteigne un stade de développement choisi, la cloche (50) peut être ôtée, la partie aérienne de la plante étant alors en contact avec l'environnement extérieur. Simultanément au retrait de la cloche (50), un joint d'étanchéité, par exemple un joint de silicone d'un type connu, peut être disposé au fond du logement (45), ledit joint formant un collet entourant la base de la tige de plante, et ledit joint permettant de confiner l'espace (11) de propagation racinaire vis-à-vis de l'environnement extérieur.

De manière générale, un rhizotron selon l'invention constitue une enceinte de culture de plantes d'utilisation polyvalente et adaptée à la réalisation d'essais de phénotypage racinaire à haut débit, notamment par la présence, au moins dans certains de ses modes de réalisation, des caractéristiques suivantes :
- avantageusement, la forme, la masse et le centre de gravité du rhizotron sont adaptés à sa mise en mouvement, en particulier dans des plateformes de phénotypage, avec un risque réduit de chute ou de blocage du fonctionnement de la plateforme,
- du fait de la paroi externe (13) qui peut être totalement transparente à la lumière, et qui peut être notamment cylindrique, le rhizotron est parfaitement adapté pour une utilisation avec des dispositifs automatisés d'acquisition d'images, en particulier des systèmes d'acquisition d'images constitutifs de plateformes connues de phénotypage de plantes,
- du fait de ses dimensions externes, qui peuvent être similaires à celles des pots de culture de plantes qui sont couramment utilisés dans des plateforme de phénotypage de plantes, le rhizotron permet l'étude de plantes de grande taille, et son utilisation n'est donc pas restreinte à la culture de plantes modèles de petite taille, par exemple *Arabidopsis thaliana,*
- le rhizotron de l'invention permet l'étude de caractéristique(s) phénotypique(s) à la fois des racines et de la partie aérienne des plantes qu'il contient, par exemple à l'aide de plateformes connues de phénotypage de plantes,
- dans les modes de réalisation d'un rhizotron de l'invention qui comporte une pluralité de logements (45), par exemple deux ou trois logements (45), celui-ci permet la culture simultanée de plusieurs plantes distinctes au sein d'un seul et même dispositif de culture, ce qui rend possible la conduite d'études des interactions par association ou par compétition entre des plantes,
- par définition, une variété de substrats peut être utilisée pour emplir tout ou partie de l'espace de propagation racinaire (11) de propagation racinaire, ce qui permet, pour un même type de plante ou pour différents types de plantes, d'étudier l'influence des caractéristiques physiques, chimiques ou biologiques du substrat sur le développement du réseau racinaire,
- dans les modes de réalisation d'un rhizotron selon l'invention qui comportent une réserve de liquide, ledit rhizotron est adapté à une alimentation automatisée en eau ou en liquide nutritif,
- dans les modes de réalisation du rhizotron pourvus d'une gaine occultante amovible, les périodes d'ombrage du réseau racinaire peuvent être choisies de manière indépendante pour chaque rhiztitron.

Dans des modes de réalisation préférés, le rhizotron de l'invention est pourvu d'un système de fixation spécifique aux embases mobiles présentes sur les convoyeurs

Préférentiellement, le rhizotron présente des caractéristiques permettant un assemblage et désassemblage rapide.

Dans des modes de réalisation préférés, le rhizotron permet la fixation d'accessoires assurant la bonne tenue des parties aériennes pendant leur croissance. (supports, tuteurs) notamment par la présence de pas fileté près des logements des graines.

Dans des modes de réalisation préférés, le rhizotron présente une grande modularité dans l'espace destiné aux racines et aux substrats (une ou plusieurs couches, séparées ou non, d'épaisseur modulable)

L'invention pourra être mieux comprise à la lecture de la description détaillée qui va suivre, d'exemples de mise en oeuvre non limitatifs de celle-ci, et à l'examen du dessin annexé, sur lequel:
- la **figure 1** est une coupe longitudinale d'un exemple de rhizotron

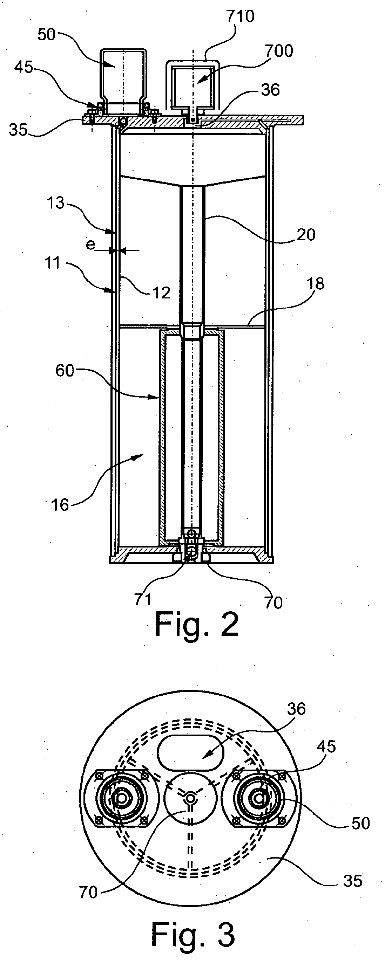

- la **figure 2** est une vue analogue à la figure 1 d'une variante de réalisation,
- la **figure 3** est une vue supérieure de la platine (35) du rhizotron de la figure 2,
- les **figures 4 et 5** sont des vues analogues à la figure 1 d'une variante de réalisation. La figure 5 est une vue du rhizotron de la figure 4 qui a subi une rotation horizontale d'un angle de 90 °,
- la **figure 6** est une vue supérieure de la platine (35) de la variante de réalisation des figures 4 et 5,

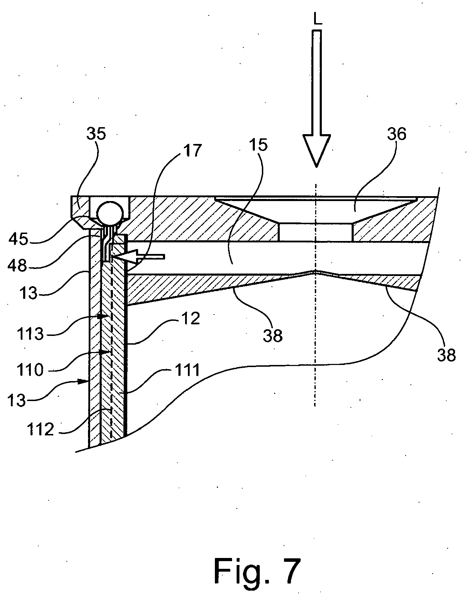

- la **figure 7** est une vue partielle de la partie supérieure d'une variante du rhizotron, selon une coupe longitudinale,
- les **figures 8 et 9** illustrent l'utilisation d'une gaine d'occultation de la lumière,
- les **figures 10** et **11** illustrent une variante du rhizotron pourvu d'un système de compression du réseau racinaire. La figure 10 illustre cette variante du rhizotron avec le système de compression en position de repos. La figure 11 illustre cette variante du rhizotron avec le système de compression en position de fonctionnement,
- la **figure** 12 est une vue supérieure de la variante de rhizotron représentée sur les figures 10 et 11. Sur la figure 12 est représenté une variante du système d'alimentation du rhizotron en liquide, par l'intermédiaire d'une réserve de liquide située dans la partie supérieure du rhizotron et de canaux d'écoulement permettant une circulation du liquide à partir de la réserve et vers l'espace de propagation racinaire, et

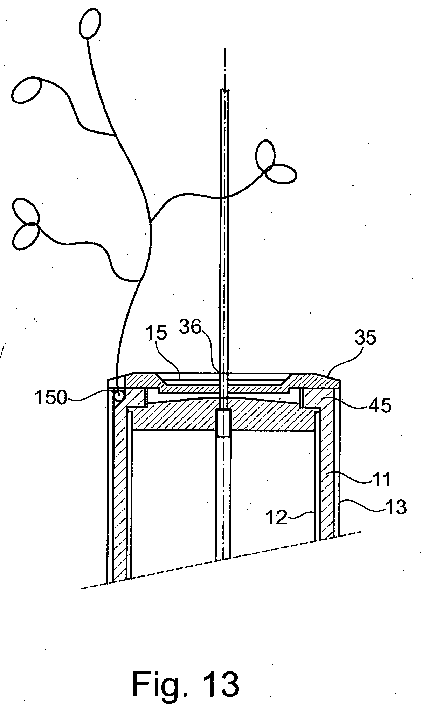

- la **figure 13** est une vue partielle de la partie d'une variante du rhizotron, selon une coupe longitudinale.

Le rhizotron (10) représenté, dans différentes formes de réalisation, sur les figures 1, 2, 5 et 7 comporte un espace de propagation racinaire destiné à être rempli d'un substrat adapté. Sur la variante de réalisation de la figure 1, l'espace de propagation racinaire est référencé (11). La variante du rhizotron représenté sur les figures 4, 5 et 7 comporte un espace de propagation racinaire (11) comprenant un pluralité de zones, respectivement une zone (110) de propagation racinaire et une zone (111) de substrat et de stockage de liquide. Sure la variante de réalisation représentée sur la figure 7, les zones (110) et (111) sont séparées l'une de l'autre par une membrane filtrante (113). La structure de l'espace de propagation racinaire (11) de la variante de rhizotron représentée sur la figure 7 comporte des espaces séparés destinés respectivement (i) à contenir les racines et (ii) à contenir un substrat, cet agencement de l'espace de propagation racinaire (11) en plusieurs zones séparées permettant d'obtenir une visibilité de 100% des racines, tout en maintenant un contact entre la racine et le substrat du fait du caractère poreux de la membrane filtrante interposée entre ces derniers.

Le substrat est par exemple un support inerte adapté à la rétention et à la diffusion d'une solution nutritive ou dont les capacités physico-chimiques sont en adéquation avec les besoins de la culture ou un complexe caractérisé par des populations microbiennes connues. Le substrat est par exemple de la terre, du sable ou un terreau. La granulométrie du substrat doit être compatible avec un remplissage aisé de la zone qui lui est dédié, incluant ou non l'espace de propagation racinaire (11).

L'empotage, c'est-à-dire l'introduction du substrat dans le rhizotron, peut s'effectuer à l'aide d'une table vibrante et/ou d'un entonnoir spécifique.

L'espace destiné à la propagation racinaire (11) et aux substrats est défini entre deux parois (12) et (13), qui sont cylindriques ou coniques et concentriques autour de l'axe longitudinal X du rhizotron dans l'exemple considéré, l'une référencée (13), externe, étant réalisée dans un matériau transparent tel que du verre borosilicate ou une matière synthétique organique telle que du polycarbonate et l'autre référencée (12), interne, étant réalisée de préférence en un matériau opaque tel qu'un métal, notamment de l'acier inoxydable.

La dimension radiale e de l'espace de propagation racinaire (11) est par exemple comprise entre 1 et 50 mm, étant de préférence comprise entre 2 et 10 mm, étant par exemple de 3 mm environ.

Dans le cas d'une propagation racinaire à l'intérieur du substrat, la faible épaisseur du substrat permet aux racines d'être visibles le long de la paroi externe (13), ce qui permet leur caractérisation aisée par prise d'image.

Dans la variante du rhizotron comportant un espace de propagation racinaire (11) comprenant une pluralité de zones dont une vue partielle détaillée est représentée sur la figure 7, les racines sont préférentiellement localisées dans la zone située le plus à l'extérieur de l'espace de propagation racinaire (11) et sont en contact avec la paroi externe (13) du rhizotron. Cette variante du rhizotron permet une caractérisation optimale des racines, lesquelles sont totalement accessibles à l'observation ou à la mesure. Cette variante du rhizotron préserve les échanges minéraux et organiques entre substrat et racine : la présence d'une paroi ou membrane poreuse (112) sépare physiquement la zone de propagation racinaire (110) des autres espaces internes de l'espace de propagation racinaire (11) mais permet à la solution aqueuse de traverser ces couches et constitue le média des échanges minéraux et organiques..La hauteur H de l'espace de propagation racinaire (11) est par exemple comprise entre 20 cm et plus de 150 cm Une hauteur inférieure à 70 cm facilite le transport du rhizotron.

La paroi interne (12) défmit un espace (15) permettant de contenir une réserve d'un liquide tel que de l'eau ou une solution nutritive, destiné à alimenter le substrat, comme cela est représenté sur les figures 1, 2, 4, 5 et 7.

Dans certaines variantes du rhizotron comme celle représentée sur les figures 10, 11 et 12, l'espace de propagation racinaire (11) comprend une poche déformable (114) qui peut être gonflée par un fluide liquide ou gazeux, et de préférence par un fluide gazeux. Sur la variante de rhizotron représentée dans les figures 10 et 11, la poche déformable (114) comprend un orifice (115) muni d'une valve (115) pour introduire le fluide liquide ou gazeux dans la poche déformable (114). La poche déformable (114) peut être reliée à une source de fluide liquide ou gazeux sous pression par l'intermédiaire de la valve (115) et d'une tubulure (117) dont l'extrémité (118) peut être reliée à une source de fluide liquide ou gazeux, par exemple une source de fluide gazeux telle qu'une bouteille contenant de l'azote liquide. Sur les figures 10 et 11, la poche déformable (114) est cylindrique de révolution et coaxiale avec la paroi interne (12) et avec la paroi externe (13). La figure 11 représente cette variante du rhizotron avec la poche déformable (114) à l'état dégonflé. La figure 12 représente cette variante du rhizotron avec la poche déformable (114) à l'état gonflé, avec la face de la poche déformable orientée vers la paroi externe (13) qui exerce une pression sur le matériau substrat contenu dans l'espace de propagation racinaire (11).

Dans certaines variantes du rhizotron, comme celles représentées sur les figures 1 et 2, la réserve de liquide est localisée sur une grande partie de la hauteur de l'espace (15), le passage de liquide de la réserve de liquide vers l'espace de propagation racinaire (11) étant localisé dans la partie inférieure de l'espace (15).

Dans d'autres variantes du rhizotron, comme celles représentées sur les figures 4, 5 et 7, la réserve de liquide est située dans la partie supérieure de l'espace (15), le passage de liquide de la réserve de liquide vers l'espace de propagation racinaire (11) étant localisé dans la partie supérieure de l'espace (15).

Dans l'exemple illustré à la figure 1, la paroi interne (12) entoure en partie inférieure une masse (16) d'un matériau poreux, tel qu'une mousse à cellules ouvertes, qui peut s'imprégner du liquide tout en évitant au substrat de quitter l'espace de propagation racinaire (11) par la communication par laquelle le liquide gagne le substrat.

Une cloison (18) s'étend perpendiculairement à l'axe longitudinal X, au-dessus de la masse (16) de matériau poreux.

La communication précitée comporte par exemple un ou plusieurs trous (17) réalisés dans la paroi interne (12) en partie inférieure du rhizotron, sous la cloison (18). Les trous (17) peuvent être les ouvertures ou les pores d'une cloison microperforée ou d'une membrane filtrante.

La cloison (18) est ajourée en son centre pour le passage d'un tube central (20) qui sert à la fois à l'alimentation en liquide et de réserve de liquide. Ce tube (20) traverse de façon étanche la cloison (18) et débouche à son extrémité inférieure dans un évidement (21) réalisé dans la masse (16) de matériau poreux.

Un socle (25) ferme en partie inférieure l'espace destiné aux racines et au substrat (11) et l'espace interne (15). Ce socle peut présenter des perforations sous l'espace destiné au(x) substrat(s), pouvant faire office de d'échappatoire pour l'eau de drainage. Ces perforations peuvent être facilement obturées, si nécessaire, pour maintenir le confinement de la zone destinée au substrat.

Ce socle (25) peut présenter, comme illustré, à sa périphérie, une forme épaulée qui permet son emboitement sur les parois externe (13) et interne (12) et présenter en son centre un passage (27) pour une partie filetée (30) sur laquelle est vissé un écrou (31) qui assure la retenue du socle (25) sur le tube central (20).

Dans les variantes de réalisation du rhizotron représentées sur les figures 4 et 5, les principaux éléments de structure du rhizotron, en particulier la paroi interne (12), la paroi externe (13), les éléments constitutifs de l'espace (11) de propagation racinaire, ainsi que les éléments constitutifs de la réserve de liquide, sont maintenus en place grâce à une tige centrale (300) traversant verticalement le rhizotron et dont les extrémités comprennent un filetage et débouchent respectivement au niveau de la partie inférieure du socle (25) et au niveau de la partie supérieure de la platine (35). Des écrous (301, 302) sont fixés respectivement (i) sur la partie filetée de la tige (30) débouchant par la platine (35) et (ii) sur la partie filetée débouchant par le socle (25) et bloquent les différents éléments précités du rhizotron.

Dans les variantes du rhizotron représentées sur les figures 4 et 5, le socle (25) du rhizotron comporte des passages (400) pour une partie filetée (401), permettant la fixation du socle sur une embase (402) d'un système de convoyage.

Un joint (28) peut assurer l'étanchéité au niveau de l'ouverture centrale (27) du socle (25).

Le rhizotron (10) comporte en partie supérieure une platine (35) qui est pourvue, comme on le voit sur la figure 1, d'une ouverture (36) d'introduction du liquide L de remplissage du tube central (20), ouverture non apparente sur la figure 2 mais qui est représentée sur les figures 1 et 4. Cette ouverture (36) débouche en regard d'une paroi conique (38) qui est fixée à sa périphérie à la paroi interne (12) à laquelle se raccorde le tube central (20) et qui guide l'écoulement du liquide vers le tube central (20).

La variante du rhizotron représentée sur les figures 2, 4, 5 et 7, comporte en partie supérieure une platine (35) qui est pourvue d'une ouverture (36) d'introduction du liquide L de remplissage de là réserve de liquide. Dans cette variante du rhizotron, cette ouverture (36) débouche en regard d'une paroi conique (38) qui est fixée à sa périphérie à la paroi interne (12). Dans cette variante particulière du rhizotron, le tube central (20) n'est pas présent et l'apport de liquide est réalisé grâce à la paroi conique (38) qui assure la diffusion latérale de liquide vers l'espace de propagation racinaire (11) par passage du liquide L à travers la paroi interne (12) par les trous (17). Dans les variantes de rhizotron représentée sur les figures 4, 5 et 7, dans lesquelles l'espace de propagation racinaire (11) comprend une pluralité de zones, le liquide imprègne la matériau de la zone de stockage de liquide (111), par exemple par capillarité, puis circule verticalement à l'intérieur de cette zone par gravité. Le liquide L présent dans la zone de stockage (111) circule ensuite vers la zone de propagation racinaire (110).

La variante du rhizotron qui est représentée sur la figure 5 comporte, à l'intérieur de l'espace (15) de réserve de liquide et disposé sur la paroi interne (12) au niveau des perforations (17), un bloc de mousse filtrante (200), lequel peut être semi-rigide. Dans cette variante de réalisation, le liquide peut circuler de l'espace (15) vers l'espace (11) de propagation racinaire, et en premier lieu vers la zone (111) de stockage de liquide contenue dans ledit espace (11) de propagation racinaire. Le bloc (200) peut être constitué d'un matériau de mousse filtrante ayant une taille de pores adaptée au niveau de sélectivité du filtre qui est désiré, par exemple de 37 µm ou de 22 µm.

La variante du rhizotron qui est représentée sur la figure 5 comporte aussi un bloc de mousse filtrante (210) localisé en partie supérieure de l'espace (11) de propagation racinaire, dont les parois latérales sont délimitées respectivement (i) par la face interne de la paroi externe (13) et la face interne de la paroi interne (12), en regard des perforations (17) permettant la communication de fluides et de gaz entre l'espace (15) de réserve de liquide et l'espace (11) de propagation racinaire. Le bloc de mousse filtrante (210) peut être un bloc de mousse filtrante flexible. Le bloc (210) peut être constitué d'un matériau de mousse filtrante ayant une taille de pores de 37 µm ou encore d'un matériau de mousse filtrante ayant une taille de pores de 22 µm, selon le niveau de sélectivité du filtre qui est désiré. Le bloc (210) de mousse filtrante permet le maintien en place des différents éléments contenus dans l'espace (11) de propagation racinaire, notamment du substrat, le cas échéant un bloc de mousse diffusante apte à être imprégnée d'un liquide nutritif pour les plantes et approprié pour leur croissance.

La platine (35) comporte sur sa face inférieure, comme on peut le voir sur la figure 1, un ou plusieurs reliefs (40) permettant son centrage relativement à la paroi interne (12).

Le positionnement de la paroi externe (13) relativement à la paroi interne (12) est assuré par le socle (25) et la platine (35).

Des logements (45) sont prévus sur la platine (35) pour recevoir les semences ou graines germées S dont on cherche à étudier le développement.

Ces logements (45) sont par exemple cylindriques de révolution, avec un fond (46), par exemple conique, étant par exemple réalisés sous la forme de perçages borgnes dans la platine (35).

Un passage (48) est prévu au sein du relief (40) entre le fond de chaque logement (45) et l'espace de propagation racinaire (11). Ce passage (48) est de préférence, comme illustré, d'axe oblique s'éloignant de l'axe X en progressant vers le bas. L'angle d'inclinaison du passage (48) est par exemple compris entre 30 et 60 °, étant par exemple de 45 °. Le diamètre de chaque logement (45) varie de préférence de 5 mm à 50 mm. Le diamètre des logements (45) peut être adapté selon la taille des semences qu'ils sont destinés à recevoir. La longueur du passage (48) varie de préférence de 2 mm à 40 mm.

Chaque passage (48) est par exemple formé par perçage du relief (40).

La platine (35) peut supporter, comme illustré, une ou plusieurs cloches (50) de protection de la partie aérienne des plants. Ces cloches (50) sont par exemple constituées par des flacons à col fileté, disposés tête en bas sur la platine (35), à l'aide d'embases (55) boulonnées ou fixées autrement sur celle-ci.

La platine (35) peut être de diamètre supérieur au diamètre externe de la paroi externe (13), de façon à faciliter la manipulation du rhizotron (10) et bénéficier d'une surface supplémentaire pour recevoir les cloches de protection (50).

La variante du rhizotron qui est représenté sur les figures 12 et 13 comporte l'espace (15) pour la réserve de liquide qui est localisé dans la partie supérieure du rhizotron. Selon cette variante, l'espace (15) pour la réserve de liquide est en communication fluidique avec un logement (45) pour semence par l'intermédiaire d'un canal (150) qui permet l'écoulement du liquide contenu dans l'espace (15) vers le logement (45), puis vers l'espace de propagation racinaire (11). Dans la variante représentée sur les figures 12 et 13, le volume occupé par l'espace (15) pour la réserve de liquide est partiellement à un niveau inférieur à celui d'un canal (150) et partiellement à un niveau supérieur à celui dudit canal (150).

La variante de réalisation de la figure 2 diffère de celle de la figure 1 par l'occupation d'une partie de l'espace (15) délimité par la paroi interne (12).

Dans l'exemple de la figure 2, le rhizotron comporte une membrane filtrante (60) disposée sur le trajet du liquide entre le tube central (20) et le(s) substrat(s) dans l'espace (11)

La membrane (60) est par exemple cylindrique d'axe X, fermée à ses extrémités supérieure et inférieure, et située sous la cloison (18) délimitant supérieurement l'espace d'accumulation du liquide autour du tube central (20).

La membrane (60) a par exemple un pouvoir de filtration suffisant pour assurer la retenue des micro-organismes, par exemple un pouvoir de filtration de 0.22 µm ou mieux.

La hauteur de la colonne de liquide contenue dans le tube central (20) assure une pression qui facilite la traversée de la membrane (60).

Comme représenté sur la figure 2, un ou plusieurs filtres (700) peuvent être présents sur un ou plusieurs orifices d'introduction de liquide (36) situés sur la platine (35). Chaque orifice d'introduction de liquide (36) auquel est raccordé un filtre (700) débouche dans la réserve de liquide. Chaque filtre (700) est muni d'un orifice d'entrée de liquide, non représenté sur la figure 2, lequel peut être situé en regard de l'orifice de sortie de liquide qui est raccordé à l'orifice d'introduction de liquide (36). Dans cette variante du rhizotron, le liquide L avec lequel est alimenté le rhizotron en eau et/ou liquide nutritif est filtré au travers du filtre (700) afin notamment d'éliminer les microorganismes éventuellement présents au sein dudit liquide, puis alimente le réservoir de liquide. Un filtre (700) peut être par exemple une cartouche filtrante stérilisante ayant une taille de pore de 0,22 µm, d'un type connu. Le filtre (700) peut-être surmonté d'un couvercle de protection (710), lequel isole le filtre (700) de l'environnement extérieur entre deux périodes d'utilisation du filtre (700) pour le remplissage de la réserve de liquide du rhizotron (10).

Le rhizotron (10) peut avantageusement être muni, comme illustré sur la figure 2, d'un orifice de drainage (70) en partie inférieure. Cet orifice de drainage (70) est par exemple pourvu d'un clapet (71), pouvant être actionné de manière automatisée, par exemple lorsque le rhizotron est placé sur une chaine de convoyage, ce qui permet de contrôler la vidange du réservoir central. Dans les variantes du rhizotron pour lesquelles la paroi externe (13) est transparente à la lumière sur au moins une partie de sa surface, il est avantageux de disposer d'un dispositif permettant de protéger les racines de la lumière entre deux mesures. Dans ces variantes, le rhizotron (10) peut être disposé à l'intérieur d'un dispositif occultant amovible (80), comme illustré aux figures 8 et 9.

Sur ces figures, le rhizotron (10) est représenté de façon très schématique. A titre d'exemple, un système élévateur (100) est par exemple prévu pour, de façon automatique, rétracter le dispositif occultant, notamment l'abaisser, comme illustré sur la figure 6, afin de permettre la prise d'images, et la redéployer ensuite, comme illustré à la figure 7, pour protéger les racines de la lumière.

La commande du système élévateur s'effectue par exemple de façon électro-pneumatique, selon un processus automatique qui comporte par exemple une étape de prélèvement automatisé du rhizotron (10) dans une zone de stockage, d'introduction dans une cabine de prise d'images, puis de retour en zone de stockage.

C'est dans la cabine de prise d'images que l'abaissement de la gaine occultante (80) peut avoir lieu, par exemple.

La gaine (80) peut être en un tissu, notamment semi-souple.

Le transport du rhizotron (10) s'effectue par exemple avec un système de convoyage tel que des convoyeurs à bandes ou à rouleaux, par exemple d'une largeur de 20 cm, les rhizotrons étant placés sur des embases mobiles.

Le rhizotron (10) a, de préférence, une largeur inférieure à 18 cm à sa base, et un poids qui n'excède de préférence pas 15 kg.

Pour utiliser le rhizotron, des graines pré-germées sont positionnées dans les logements (45) prévus à cet effet. Une fois le plant suffisamment développé, la cloche peut être enlevée et un joint étanche, par exemple de silicone, placé au niveau du collet de la plante.

L'invention n'est pas limitée aux exemples illustrés.

Bien que l'espace de propagation racinaire soit de préférence de forme annulaire continue autour de l'axe X, une ou plusieurs séparations peuvent être prévues pour former des secteurs indépendants De préférence, les parois interne (12) et externe (13) sont cylindriques de révolution autour de l'axe X. Comme illustré en variante, la section des parois interne et externe est non circulaire, étant par exemple polygonale ou elliptique.

De préférence, les logements (45) recevant les semences sont décalés de l'espace de propagation racinaire (11) vers l'intérieur, quand le rhizotron 10 est observé de dessus selon l'axe X. En variante, les logements (45) se situent au droit de l'espace de propagation racinaire (11).

La réserve de liquide peut être réalisée autrement qu'illustré.

Des reliefs formant entretoises peuvent s'étendre le cas échéant entre les parois interne (12) et externe (13), sur tout ou partie de la hauteur de l'espace de propagation racinaire.

Le rhizotron ainsi défini peut comporter tout ou partie des caractéristiques précédemment définies.

## Revendications

1. Rhizotron (10) **caractérisé en ce qu'**il comporte :
- une paroi interne (12),
- une paroi externe (13), définissant avec la paroi interne (12) un espace de propagation racinaire (11), destiné à recevoir un substrat,
- au moins un logement (45) en partie supérieure pour supporter, indépendamment de la présence de substrat dans l'espace de propagation racinaire (11), une semence, ce logement (45) communiquant avec l'espace de propagation racinaire.

2. Rhizotron (10) **caractérisé en ce qu'**il comporte :
- une paroi externe (13), cylindrique de révolution,
- une paroi interne (12) coaxiale à la paroi externe, définissant avec cette dernière un espace de propagation racinaire (11), destiné à recevoir un substrat,
- un système d'alimentation dé l'espace de propagation racinaire en un liquide, notamment de l'eau ou une solution nutritive.

3. Rhizotron selon l'une des revendications 1 ou 2, la paroi externe (13) étant, au moins sur une partie de sa surface, transparente à au moins une longueur d'onde électromagnétique, en particulier transparente à la lumière visible, à un rayonnement infrarouge, à un rayonnement ultraviolet ou aux rayons X.

4. Rhizotron selon l'une des revendications 1 à 3, la paroi externe (13) étant transparente à au moins une longueur d'onde électromagnétique sur la totalité de sa surface, en particulier transparente à la lumière visible, à un rayonnement infrarouge, à un rayonnement ultraviolet ou aux rayons X.

5. Rhizotron selon l'une des revendications 1 à 4, l'épaisseur (e) de l'espace de propagation racinaire (11) étant sensiblement constante.

6. Rhizotron selon l'une des revendications 1 à 5, l'espace de propagation racinaire (11) comportant une pluralité de zones, au moins (i) une zone de stockage de liquide (111) et (ii) une zone de propagation racinaire (110).

7. Rhizotron selon l'une des revendications 1 à 6, l'espace de propagation racinaire (11) comportant une poche déformable (114) qui peut être gonflée par un fluide liquide ou gazeux, la poche déformable (114) étant de préférence cylindrique de révolution et coaxiale avec au moins la paroi interne (12) ou la paroi externe (13).

8. Rhizotron selon l'une des revendications 1 à 7, les parois externe (13) et interne (12) étant tubulaires, de préférence cylindriques de révolution ou conique.

9. Rhizotron selon l'une des revendications 1 à 8, la paroi interne (12) étant constituée d'un matériau choisi parmi un matériau polymère d'origine naturelle ou synthétique ou un métal.

10. Rhizotron selon l'une des revendications 1 à 9, comportant plusieurs logements (45), notamment deux logements (45) diamétralement opposés, chaque logement (45) pouvant recevoir au moins une semence.

11. Rhizotron selon l'une des revendications 1 à 10, comportant pour chaque logement (45) une cloche (50) fixée de manière amovible sur le rhizotron, de préférence par vissage, agencée pour isoler la partie aérienne d'une plante de l'environnement extérieur.

12. Rhizotron selon l'une des revendications 1 à 11, comportant une réserve de liquide au moins partiellement contenue dans un réservoir situé à l'intérieur du rhizotron.

13. Rhizotron selon l'une des revendications 1 à 12, comportant une membrane filtrante (60) ou une masse (16) d'un matériau poreux disposée en amont de l'espace de (11) de propagation racinaire vis-à-vis de la circulation du liquide vers le substrat.

14. Rhizotron selon l'une des revendications 1 à 13, comportant en partie inférieure un socle démontable (25).

15. Rhizotron selon l'une des revendications 1 à 14, le ou les logements (45) pour recevoir la ou les semences (S) étant réalisés sur une platine 35 surmontant parois interne (12) et externe (13).

16. Rhizotron selon l'une des revendications 1 à 15, étant équipé d'un dispositif occultant amovible (80), pouvant être disposé autour de la paroi externe pour la protéger de la lumière et abaissé ou enlevé pendant l'observation des racines.

17. Procédé pour la détermination d'une caractéristique phénotypique des racines de plantes, comprenant les étapes suivantes :
a) fournir au moins un rhizotron selon l'une des revendications 1 à 16, contenant au moins une plante,
b) exposer le rhizotron à une source d'énergie, notamment une source de lumière,
c) collecter un signal émis en retour, notamment réfléchi,
d) déterminer une ou plusieurs caractéristiques phénotypiques racinaires de la plante à partir du signal collecté à l'étape c).

18. Procédé de détermination d'au moins une caractéristique phénotypique de plante comprenant les étapes suivantes :
a) disposer une pluralité de rhizotrons selon l'une des revendications 1 à 16, aussi appelés ensemble de rhizotrons, avec un ou plusieurs rhizotrons contenant au moins une plante, chaque rhizotron étant placé sur un support mobile, aussi appelée chaîne de convoyage,
b) réaliser un déplacement de l'ensemble de rhizotrons par translation sur la chaîne de convoyage jusqu'à placer au moins un des rhizotrons devant un dispositif d'acquisition d'images des racines de la plante ou des plantes disposée(s) dans ledit rhizotron,
c) acquérir une image des racines de ladite plante ou desdites plantes,
d) répéter les étapes b) et c).

## Patentansprüche

1. Rhizotron (10), **dadurch gekennzeichnet, dass** es Folgendes umfasst:
- eine Innenwand (12),
- eine Außenwand (13), die zusammen mit der Innenwand (12) einen Wurzelverbreitungsraum (11) zur Aufnahme eines Substrats begrenzt,
- mindestens ein Gehäuse (45) im oberen Teil, um unabhängig davon, ob ein Substrat im Wurzelverbreitungsraum (11) vorliegt, einen Samen zu tragen, wobei dieses Gehäuse (45) mit dem Wurzelverbreitungsraum in Verbindung steht.

2. Rhizotron (10), **dadurch gekennzeichnet, dass** es Folgendes umfasst:
- eine kreiszylinderförmige Außenwand (13),
- eine mit der Außenwand koaxiale Innenwand (12), die mit letzterer einen Wurzelverbreitungsraum (11) zur Aufnahme eines Substrats begrenzt,
- ein System zur Versorgung des Wurzelverbreitungsraums mit einer Flüssigkeit, insbesondere mit Wasser oder einer Nährlösung.

3. Rhizotron nach einem der Ansprüche 1 oder 2, wobei die Außenwand (13) auf zumindest einem Teil ihrer Oberfläche für mindestens eine elektromagnetische Wellenlänge durchlässig ist, insbesondere für sichtbares Licht, für eine Infrarotstrahlung, für eine ultraviolette Strahlung oder für Röntgenstrahlen durchlässig ist.

4. Rhizotron nach einem der Ansprüche 1 bis 3, wobei die Außenwand (13) auf ihrer gesamten Oberfläche für mindestens eine elektromagnetische Wellenlänge durchlässig ist, insbesondere für sichtbares Licht, für eine Infrarotstrahlung, für eine ultraviolette Strahlung oder für Röntgenstrahlen durchlässig ist.

5. Rhizotron nach einem der Ansprüche 1 bis 4, wobei die Dicke (e) des Wurzelausbreitungsraums (11) im Wesentlichen konstant ist.

6. Rhizotron nach einem der Ansprüche 1 bis 5, wobei der Wurzelausbreitungsraum (11) eine Mehrzahl von Bereichen, mindestens (i) einen Flüssigkeitslagerungsbereich (111) und (ii) einen Wurzelausbreitungsbereich (110) aufweist.

7. Rhizotron nach einem der Ansprüche 1 bis 6, wobei der Wurzelausbreitungsbereich (11) einen verformbaren Beutel (114) aufweist, der durch ein flüssiges oder gasförmiges Fluid aufgeblasen werden kann, wobei der verformbare Beutel (115) vorzugsweise drehzylinderförmig und zumindest mit der Innenwand (12) oder der Außenwand (14) koaxial ist.

8. Rhizotron nach einem der Ansprüche 1 bis 7, wobei die Außenwand (13) und die Innenwand (12) rohrförmig, vorzugsweise drehzylinderförmig oder kegelförmig sind.

9. Rhizotron nach einem der Ansprüche 1 bis 8, wobei die Innenwand (12) aus einem Material besteht, ausgewählt aus einem polymeren Material natürlichen oder künstlichen Ursprungs oder einem Metall.

10. Rhizotron nach einem der Ansprüche 1 bis 9, umfassend mehrere Gehäuse (45), insbesondere zwei diametral gegenüberliegende Gehäuse (45), wobei jedes Gehäuse (45) mindestens einen Samen aufnehmen kann.

11. Rhizotron nach einem der Ansprüche 1 bis 10, umfassend für jedes Gehäuse (45) eine Glocke (50), die vorzugsweise durch Verschraubung am Rhizotron lösbar befestigt ist, und zur Isolierung des oberirdischen Teils einer Pflanze gegen die äußere Umwelt angeordnet ist.

12. Rhizotron nach einem der Ansprüche 1 bis 11, umfassend einen zumindest teilweise in einem innerhalb des Rhizotrons befindlichen Behälter enthaltenen Flüssigkeitsvorrat.

13. Rhizotron nach einem der Ansprüche 1 bis 12, umfassend eine Filtermembrane (60) oder eine Masse (16) aus einem porösen Material, welche in Bezug auf einen Fließweg der Flüssigkeit zum Substrat stromaufwärts vom Wurzelausbreitungsraum (11) angeordnet ist.

14. Rhizotron nach einem der Ansprüche 1 bis 13, welches in seinem unteren Teil einen demontierbaren Sockel (25) umfasst.

15. Rhizotron nach einem der Ansprüche 1 bis 14, wobei der oder die Gehäuse (45) zur Aufnahme des oder der Samen (S) auf einer Platte (35) ausgebildet ist, die sich über der Innenwand (12) und der Außenwand (13) befindet.

16. Rhizotron nach einem der Ansprüche 1 bis 15, welches mit einer abnehmbaren Bedeckungsvorrichtung (80) ausgestattet ist, die um die Außenwand angeordnet werden kann, um diese gegen Licht zu schützen, und die während der Beobachtung der Wurzeln heruntergelassen oder abgenommen wird.

17. Verfahren zur Bestimmung einer phänotypischen Eigenschaft der Wurzeln von Pflanzen, umfassend folgende Schritte:
a) Bereitstellung mindestens eines mindestens eine Pflanze enthaltenden Rhizotrons nach einem der Ansprüche 1 bis 16,
b) Aussetzen des Rhizotrons einer Energiequelle, insbesondere einer Lichtquelle,
c) Auffangen eines zurückgestrahlten, insbesondere reflektierten Signals,
d) Bestimmen einer oder mehrerer phänotypischer Eigenschaften der Wurzeln der Pflanze anhand des im Schritt (c) aufgefangenen Signals.

18. Verfahren zur Bestimmung mindestens einer phänotypischen Eigenschaft einer Pflanze, umfassend folgende Schritte:
a) Aufstellen einer Mehrzahl von Rhizotronen nach einem der Ansprüche 1 bis 16, auch Rhizotron-Satz genannt, mit einem oder mehreren mindestens eine Pflanze enthaltenden Rhizotronen, wobei jedes Rhizotron auf einem beweglichen Träger, auch Förderkette genannt, aufgestellt wird,
b) Durchführen einer translatorischen Bewegung des Rhizotron-Satzes auf der Förderkette, bis mindestens eines der Rhizotrone vor eine Vorrichtung zum Erfassen von Bildern der Wurzeln der in dem Rhizotron angeordneten Pflanze(n) gelangt,
c) Erfassen eines Bildes der Wurzeln der Pflanze(n),
d) Wiederholung der Schritte b) und c).

## Claims

1. Rhizotron (10) **characterised in that** it comprises :
- an internal wall (12),
- an external wall (13), defining with the internal wall (12) a root spreading area (11) designed to receive a substrate,
- at least one housing (45) in the upper part to support a seed independently from the presence of the substrate in the root spreading area (11), wherein this housing (45) communicates with the root spreading area.

2. Rhizotron (10) **characterised in that** it comprises:
- an external wall (13), cylindrical in revolution,
- an internal wall (12) which is coaxial to the external wall and which defines with it a root spreading area (11) designed to receive a substrate,
- a system to supply the root spreading area with a liquid, in particular water or a nutrient solution.

3. Rhizotron according to one of claims 1 or 2, wherein the external wall (13) is, at least on part of its surface, transparent to at least one electromagnetic wavelength, in particular transparent to visible light, to infrared radiation, to ultraviolet radiation or to X-rays.

4. Rhizotron according to one of claims 1 to 3, wherein the external wall (13) is transparent to at least one electromagnetic wavelength over the whole of its surface, in particular transparent to visible light, to infrared radiation, to ultraviolet radiation or to X-rays.

5. Rhizotron according to one of claims 1 to 4, wherein the thickness (e) of the root spreading area (11) is substantially constant.

6. Rhizotron according to one of claims 1 to 5, wherein the root spreading area (11) comprises a plurality of zones, at least (i) a liquid storage zone (111) and (ii) a root spreading zone (110).

7. Rhizotron according to one of claims 1 to 6, wherein the root spreading area (11) comprises a deformable bag (114) which can be inflated by a liquid or gaseous fluid, wherein the deformable bag (114) is preferably cylindrical in revolution and coaxial with at least the internal wall (12) or the external wall (13).

8. Rhizotron according to one of claims 1 to 7, wherein the external (13) and internal (12) walls are tubular, preferably cylindrical in revolution or conical.

9. Rhizotron according to one of claims 1 to 8, wherein the internal wall (12) is formed of a material chosen from a polymeric material of natural or synthetic origin or a metal.

10. Rhizotron according to one of claims 1 to 9, comprising several housings (45), in particular two diametrically opposite housings (45), wherein each housing (45) is able to receive at least one seed.

11. Rhizotron according to one of claims 1 to 10, comprising, for each housing (45), a cap (50) fixed on the rhizotron in a removable manner, preferably by screwing, arranged to isolate the aerial part of a plant from the external environment.

12. Rhizotron according to one of claims 1 to 11, comprising a liquid reserve at least partially contained in a reservoir located inside the rhizotron.

13. Rhizotron according to one of claims 1 to 12, comprising a filtration membrane (60) or a mass (16) of a porous material situated upstream of the root spreading area (11) with respect to the circulation of liquid to the substrate.

14. Rhizotron according to one of claims 1 to 13, comprising a removable base (25) in the lower part.

15. Rhizotron according to one of claims 1 to 14, wherein the housing(s) (45) to receive the seed(s) (S) is/are created on a plate (35) surmounting the internal (12) and external (13) walls.

16. Rhizotron according to one of claims 1 to 15, being equipped with a removable hidding device (80), being able to be positioned around the external wall to protect it from the light and lowered or removed during observation of the roots.

17. Method to determine a phenotypic characteristic of the roots of plants, comprising the following steps:
a) providing at least one rhizotron according to one of claims 1 to 16, containing at least one plant,
b) exposing the rhizotron to a source of energy, in particular a source of light,
c) collecting a signal emitted in return, in particular reflected,
d) determining one or more phenotypic root characteristics of the plant from the signal collected in step c).

18. Method for the determination of at least one phenotypic characteristic of plants, comprising the following steps:
a) arranging a plurality of rhizotrons according to one of claims 1 to 16, also called a set of rhizotrons, with one or more rhizotrons containing at least one plant, each rhizotron being placed on a mobile support, also called a conveyor chain,
b) moving the set of rhizotrons by translational movement on the conveyor chain until at least one of the rhizotrons is placed in front of a device which acquires images of the roots of the plant or plants located in said rhizotron,
c) acquiring an image of the roots of said plant or said plants,
d) repeating steps b) and c).
